# EUROPEAN PATENT APPLICATION

(11) **EP 4 674 873 A1**
(43) Date of publication of application: **07.01.2026**
(21) Application number: 23925506.0
(22) Date of filing: 13.11.2023
(51) Int. Cl.: C08F 116/14, C08F 2/44, C08F 283/00, C08F 220/38, C08L 101/00, C08L 29/10, A61L 31/10, A61L 27/34

(54) **CYCLIC OLIGOMER, METHOD FOR PRODUCING SAME, COMPOUNDING MATERIAL AND COMPOSITE MATERIAL COMPRISING SAME, AND MEDICAL ARTICLE SURFACE-MODIFIED OR SURFACE-TREATED THEREWITH**

(30) Priority: 28.02.2023 KR 20230027295; 04.07.2023 KR 20230086434
(71) Applicant: Korea Institute of Science and Technology, Seoul 02792 (KR)
(72) Inventor: JOUNG, Yoon Ki, Seoul 02792 (KR); KANG, Seung Min, Seoul 02792 (KR); LEE, Ju Ro, Seoul 02792 (KR); YANG, Seung Won, Seoul 02792 (KR); KWAK, Seung Chul, Seoul 02792 (KR)
(74) Representative: Petty, Catrin Helen
(86) International application number: PCT/KR2023/018155
(87) International publication number: WO 2024/181641

(57) **Abstract**

The present invention relates to a cyclic oligomer, a method for producing same, a compounding material and a composite material which comprise same, and a medical product surface-modified or surface-treated therewith. The cyclic oligomer can be prepared through ring-expansion cationic polymerization using a cyclic hemiacetal ester-based initiator and a vinyl ether monomer, and has surface segregating properties.

## Description

### [Technical Field]

The present invention relates to a cyclic oligomer, a method of preparing the same, a compounding material and a composite material, which include the same, and a medical product surface-modified or surface-treated therewith.

### [Background Art]

The biomaterial market is growing every year, and is expected to grow from 50 trillion won in 2020 to 70 trillion won in 2025. Among biomaterials, polymer biomaterials account for approximately 30% of the total market share, and it is predicted that they will be used more widely in a wide range of applications in the future. The polymers used may be a synthetic polymer or a natural polymer, and includes polyolefins, polyethylene (PE), polypropylene (PP), polyvinyl chloride (PVC), polytetrafluoroethylene (PTFE), polyvinyl alcohol (PVA), polyvinyl acetate (PVAc), polybutadiene (PB), polystyrene (PS), polymethylacrylate (PMA), polyethylacrylate (PEA), polymethylmethacrylate (PMMA), polyethylmethacrylate (PEMA), polyhydroxyethylmethacrylate (PHEMA), polyvinylpyrrolidone (PVP), polyethers, polyethylene glycol (PEG), polytetrahydrofuran (PTHF), polyethyleneimine (PEI), polyesters, polycarbonate (PC), polylactide (PLA), polyethylene terephthalate (PET), polyketones, polyetheretherketone (PEEK), polyamides, polyurethane (PU), polyacrylamide (PAAm), polysilanes, polysiloxanes, polydimethylsiloxane (PDMS), starch, cellulose, chitosan, hyaluronic acid, alginate, dextran, gelatin, heparin, polypeptides, and polynucleotides. However, polymer biomaterials still have limitations in biocompatibility and biofunctionality, and there are also issues such as the risk of infection and poor binding to tissue.

When these polymer biomaterials are applied to invasive medical materials and devices in the body, there is a risk of additional problems such as hemolysis, thrombosis, immune rejection, and fibrosis, thereby hindering their long-term use. Furthermore, when blood clots and bacterial bio-films generated by blood clotting and bacterial infection are left unattended for a long period of time, these materials can move to other organs via the blood and cause systemic complications.

To effectively address these problems, such a polymer biomaterial is surface-treated to impart functionality to the polymer biomaterial surface. The surface treatment method can be broadly classified into physical coating, chemical bonding (grafting), and blending. Physical coating is a simple and inexpensive method of physically attaching functional materials to the surface of polymeric biomaterials. However, it is difficult for coating to achieve even surface treatment, and adhesion stability is poor so there is a high probability of peeling off when a device is bent or moved. Chemical bonding is also used as a way to replace coating. There is an advantage of higher adhesion stability and easier even surface treatment than coating. However, since different bonding methods must be applied depending on the polymer biomaterial, there is a disadvantage in that versatility is low and the surface treatment process is also complex. Finally, the general blending method has an advantage of high versatility without the need for an additional surface treatment process, but has a limitation that the overall properties of the polymer biomaterial change and it is difficult to apply it locally only to a surface.

As an alternative to the limitations of existing surface treatment methods, surface-segregating materials are being studied. When a surface-segregating material is mixed with a biomaterial and molded, a small amount of it migrates to the surface of the biomaterial, and then surface treatment is performed. Therefore, these materials have advantages of having little change in overall properties and no need for additional surface treatment processes. Endexo^{™}, which is the only similar technology currently commercialized, is a technology that confers surface-segregating properties by attaching a hydrophobic functional group to both ends of a polymer chain of the surface-segregating material, making hydrophobic surface treatment possible. However, this technique has a limitation in that it cannot achieve hydrophilic surface treatment, and therefore, a driving force for surface segregation must be provided through methods other than hydrophobic functional groups. Another similar technology is a technology that provides surface segregation by attaching a hydrophilic functional group to a polymer chain of the surface-segregating material. The corresponding technology has an advantage of enabling hydrophilic surface treatment, but has a disadvantage of carrying out surface treatment in water. The surface treatment is limited to a membrane material.

Meanwhile, among various surface treatment methods imparting functionality to a polymer surface, a method of forming a polymer brush is frequently applied because it can change the physicochemical properties of the polymer surface at the same time. The brush-forming method is broadly classified into two approaches, including a grafting-onto approach and a grafting-from approach. The grafting-onto type is performed by immobilizing a specific part of a pre-fabricated polymer brush on the polymer surface. On the other hand, the grafting-from approach is performed by immobilizing an initiator rather than a brush on the polymer surface, and then the polymerization reaction of a brush proceeds from the surface. In the case of the grafting-onto approach, it is difficult to form brushes with high density on the surface because steric hindrance occurs between the brushes during the reaction for immobilizing the brushes. On the other hand, in the grafting-from approach, only an initiator with relatively less steric hindrance is immobilized, so brushes are formed with high density on the surface and exhibit relatively high performance.

For the application of the grafting-from method, various methods for immobilizing an initiator on a surface are used. The most frequently-used method is chemical bonding (grafting) between a functional group on a polymer surface and an initiator. In this method, there is a disadvantage in that the reaction must be designed through complex modeling because the functional group differs depending on the type of polymer. Another method is a surface coating method using the structure of 3,4-dihydroxyphenyl-L-alanine (DOPA) amino acid, which is a key substance that allows mussels to adhere to a rock surface. When using this method, complex modeling is not required depending on a polymer type, but an additional process is still required to immobilize an initiator on a surface for surface treatment.

### [Disclosure]

### [Technical Problem]

The present invention is directed to providing a cyclic oligomer represented by Chemical Formula 1 below:

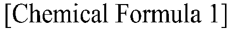

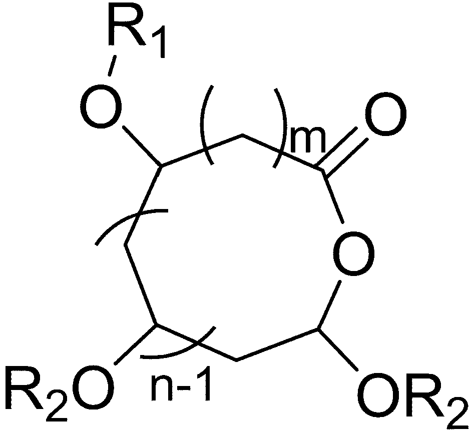

In Chemical Formula 1,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group, and
the sum of 2n and m is an integer from 10 to 600.

However, technical problems to be solved in the present invention are not limited to the above-described problems, and other problems which are not described herein will be fully understood by those of ordinary skill in the art from the following descriptions.

### [Technical Solution]

The present invention provides a cyclic oligomer represented by Chemical Formula 1 below:

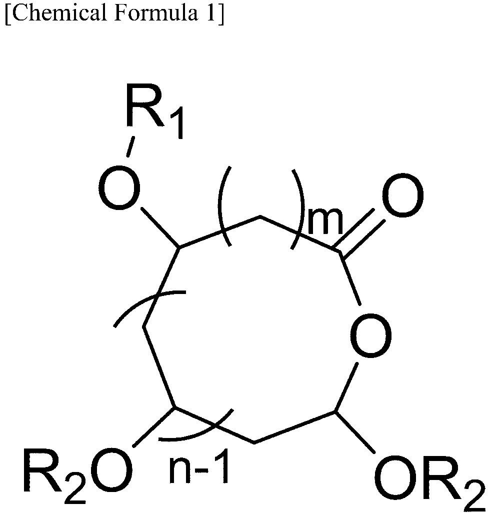

In Chemical Formula 1,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group,
R₂ is a substituted or unsubstituted C1 to C15 alkyl group, C2 to C15 alkenyl group, C2 to C15 alkynyl group, C3 to C15 cycloalkyl group, C6 to C15 aryl group pr C6 to C15 heteroaryl group, or a form in which a functional group with fewer than 15 carbon atoms is additionally introduced at the end thereof through a chemical reaction; or a C2 to C15 functional group including an initiator-derived functional group, and
the sum of 2n and m is an integer from 10 to 600.
R₂ may be a C2 to C15 alkenyl group or C2 to C15 alkynyl group, or a form in which a functional group with fewer than 15 carbon atoms is additionally introduced at the end thereof through a chemical reaction.

The chemical reaction may be a click chemical reaction selected from the group consisting of thiol-ene, thiol-yne, azide-ene, and azide-yne.

R₂ may be a C2 to C15 functional group including an initiator-derived functional group derived from an atom transfer radical polymerization (ATRP) initiator.

The cyclic oligomer may have a surface-segregating property.

The cyclic oligomer may have a number average molecular weight (Mₙ) of 5,000 to 20,000.

In one embodiment of the present invention, a cyclic hemiacetal ester-based initiator for preparing the cyclic oligomer is provided, which includes a compound represented by Chemical Formula 2 below:

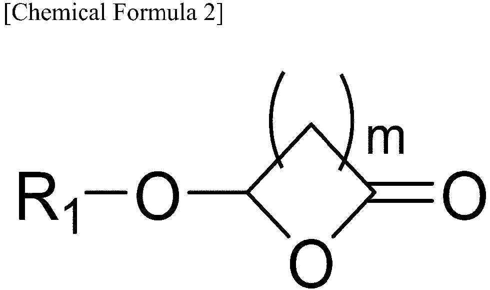

In Chemical Formula 2,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, and
m is an integer from 2 to 600.

In another embodiment of the present invention, a vinyl ether-based monomer for preparing the cyclic oligomer is provided, which includes a compound represented by Chemical Formula 3 below:

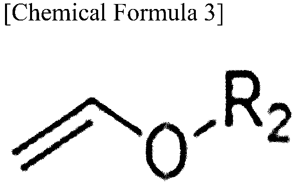

In Chemical Formula 3,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group.

In still another embodiment of the present invention, a method of preparing the cyclic oligomer through ring-expansion cationic polymerization with a cyclic hemiacetal ester-based initiator and a vinyl ether-based monomer is provided.

The ring-expansion cationic polymerization may be performed at a temperature of -70 to 0 °C.

In yet another embodiment of the present invention, a compounding material including the cyclic oligomer and a biocompatible material is provided.

The biocompatible material may include one or more resins selected from the group consisting of polyolefins, polyethylene (PE), polypropylene (PP), polyvinyl chloride (PVC), polytetrafluoroethylene (PTFE), polyvinyl alcohol (PVA), polyvinyl acetate (PVAc), polybutadiene (PB), polystyrene (PS), polymethylacrylate (PMA), polyethylacrylate (PEA), polymethylmethacrylate (PMMA), polyethylmethacrylate (PEMA), polyhydroxyethylmethacrylate (PHEMA), polyvinylpyrrolidone (PVP), polyethers, polyethylene glycol (PEG), polytetrahydrofuran (PTHF), polyethyleneimine (PEI), polyesters, polycarbonate (PC), polylactide (PLA), polyethylene terephthalate (PET), polyketones, polyetheretherketone (PEEK), polyamides, polyurethane (PU), polyacrylamide (PAAm), polysilanes, polysiloxanes, polydimethylsiloxane (PDMS), starch, cellulose, chitosan, hyaluronic acid, alginate, dextran, gelatin, heparin, polypeptides, and polynucleotides.

In the compounding material, the content of the cyclic oligomer may be 0.1 to 5 wt%.

The compounding material may be prepared through solution casting or hot-melt extrusion.

In yet another embodiment of the present invention, a composite material for surface treatment is provided, which includes the above-described compounding material; and a polymer brush grafted from the compounding material.

Grafing of the polymer brush may be performed through atom transfer radical polymerization (ATRP).

The polymer brush may be based on an acrylate-based monomer.

In yet another embodiment of the present invention, a medical product, which is surface-modified or surface-treated using the above-described compounding material, is provided.

### [Advantageous Effects]

The present invention relates to a cyclic oligomer, a method of preparing the same, a compound material and composite material including the same, and a medical product surface-modified or surface-treated therewith, wherein the cyclic oligomer can be prepared through ring-expansion cationic polymerization with a cyclic hemiacetal ester-based initiator and a vinyl ether-based monomer, and is characterized by having a surface-segregating property.

When the cyclic oligomer is applied as a surface-segregating material, it has the advantage of imparting diverse functionalities (including an anti-fouling property) to the surface of a biocompatible material. Accordingly, by mixing the cyclic oligomer with various biocompatible materials, compounding materials for surface modification can be prepared to modify the surface of medical products.

Meanwhile, the cyclic oligomer is for initiating various polymerization reactions, and is characterized by enabling bonding and grafting of polymer brushes using a surface-immobilized initiator. Particularly, the polymer brush is grafted with high density, thereby imparting various functionalities, including surface roughness, anti-fouling property, hydrophilicity, and hydrophobicity, depending on the properties of the polymer brush, and thus the surface of medical items can be treated using the polymer brush.

### [Description of Drawings]

FIG. 1 is a schematic diagram illustrating the synthesis of a cyclic hemiacetal ester initiator.
FIG. 2 is a schematic diagram illustrating the synthesis of a cyclic oligomer using ethyl vinyl ether, butyl vinyl ether, dodecyl vinyl ether, or allyl vinyl ether according to one embodiment of the present invention; a schematic diagram of the linearization of a cyclic oligomer using ethyl vinyl ether according to one embodiment of the present invention; and a schematic diagram of the functionalization of a cyclic oligomer using allyl vinyl ether according to one embodiment of the present invention.

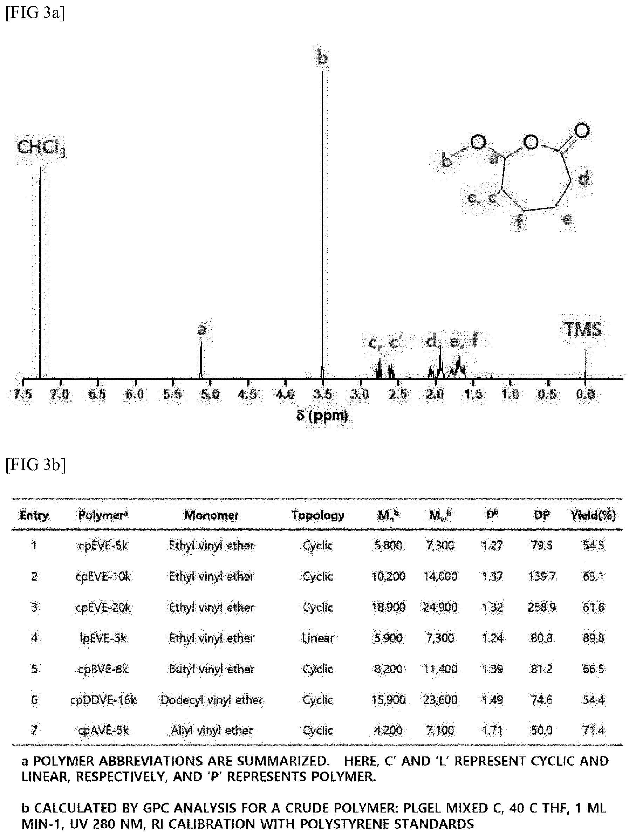

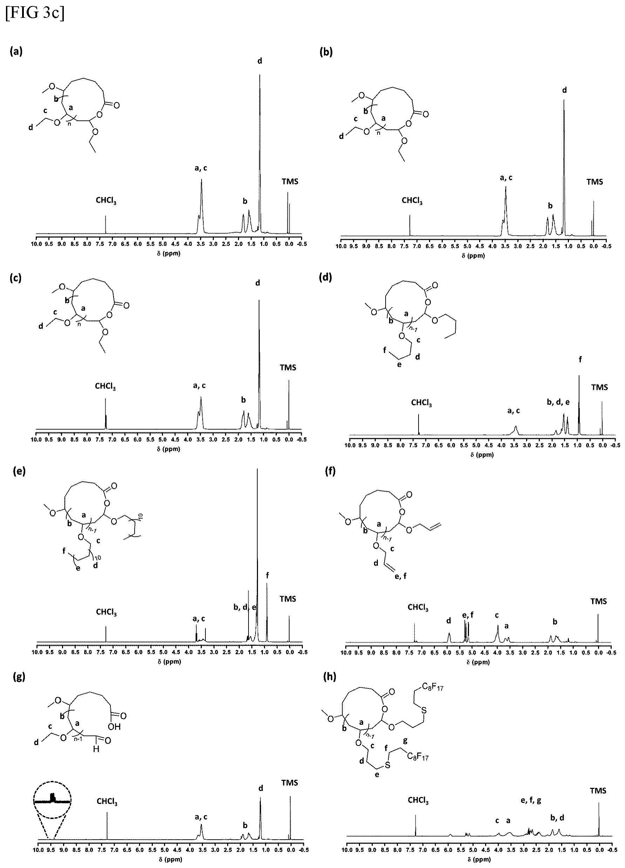

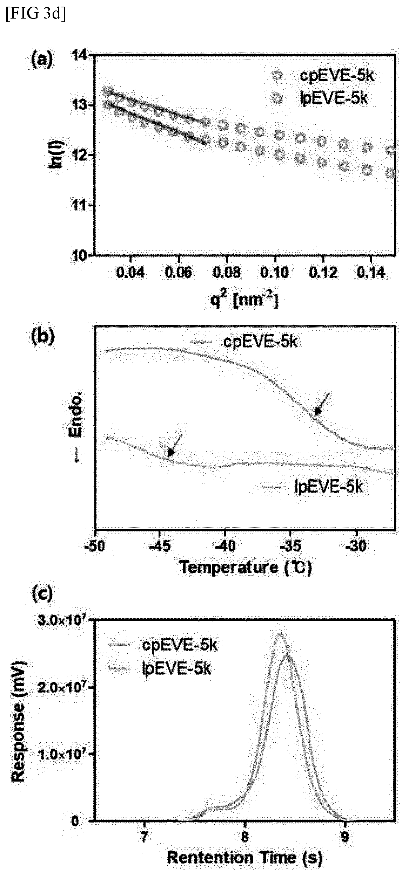

FIG. 3A shows the results of confirming the synthesis of a cyclic hemiacetal ester initiator through ¹H NMR analysis, FIG. 3B shows the results of confirming the synthesis of cyclic oligomers (cpEVE-5k, cpEVE-10k, cpEVE-20k, IpEVE-5k, cpBVE-8k, cpDDVE-16k, and cpAVE-5k) according to one embodiment of the present invention through GPC analysis, FIG. 3C shows the results of confirming the synthesis of cyclic oligomers (cpEVE-5k, cpEVE-10k, cpEVE-20k, cpBVE-8k, cpDDVE-16k, cpAVE-5k, IpEVE-5k, and cpAVE-F) according to one embodiment of the present invention through proton NMR analysis, and FIG. 3D shows the results of confirming the synthesis of cyclic oligomers (cpEVE-5k and IpEVE-5k) according to one embodiment of the present invention through SAXS, DSC and GPC analyses.
FIG. 4 is a schematic diagram of the preparation of a TPU specimen with a cyclic oligomer according to one embodiment of the present invention added by a solution casting method.
FIG. 5 shows the results of analyzing TPU specimens to which cyclic oligomers were added (cpEVE-5k and lpEVE-5k) according to one embodiment of the present invention through XPS and AR-XPS, respectively.
FIG. 6 shows the result of investigating the surface-segregating property properties of TPU specimens to which cyclic oligomers were added (cpEVE-5k, cpEVE-10k and cpEVE-20k) according to one embodiment of the present invention through XPS analysis.
FIG. 7 shows the results of verifying the surface morphology and hydrophilicity of TPU specimens to which cyclic oligomers were added (cpEVE-5k, cpEVE-10k, cpEVE-20k, cpBVE-8k, cpDDVE-16k, and lpEVE-5k) according to one embodiment of the present invention through AFM and water contact angle measurements.
FIG. 8 shows the results of verifying the functionality of TPU specimens to which functionalized cyclic oligomers (cpAVE-5k and cpAVE-F) were added according to one embodiment of the present invention through XPS, water contact angle measurements and protein adsorption assays.
FIG. 9 shows the results of analyzing PVP specimens to which cyclic oligomers were added (cpEVE-5k and lpEVE-5k) according to one embodiment of the present invention through XPS and TOF-SIMS.

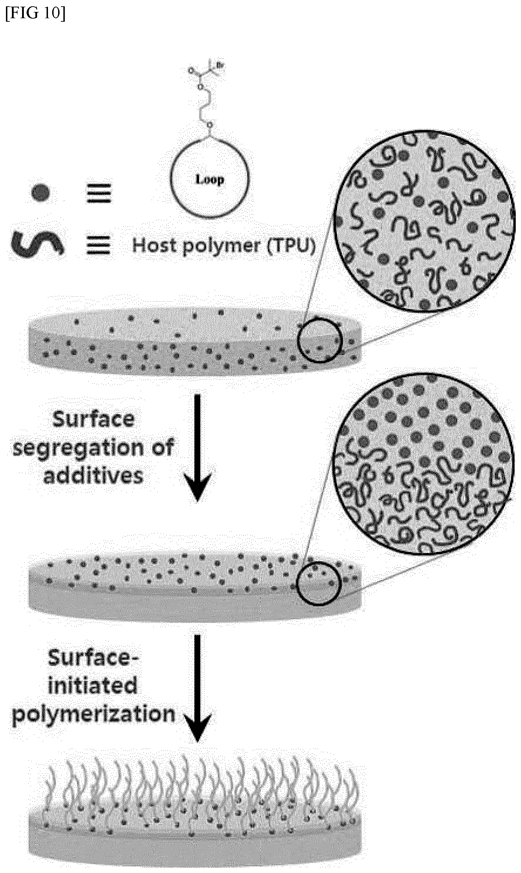

FIG. 10 is a schematic diagram of the actions (surface-segregating properties → polymer brush bonding and grafting) of ATRP cyclic oligomers according to one embodiment of the present invention.
FIG. 11 shows (a) a schematic diagram of the synthesis of an ATRP initiator-derived vinyl ether-based monomer (BrVE), (b) a schematic diagram of the synthesis of an ATRP cyclic oligomer (cpBrVE), and (c) a schematic diagram of the linearization of an ATRP cyclic oligomer (lpBrVE).
FIG. 12 shows (a) the ¹H NMR results of an ATRP initiator-derived vinyl ether-based monomer (BrVE), and (b) to (f) the GPC, ¹H NMR and DSC results of ATRP cyclic oligomers.
FIG. 13 is a schematic diagram illustrating the preparation of various biocompatible material specimens containing an ATRP cyclic oligomer according to one embodiment of the present invention through a solution casting method.
FIG. 14 shows the XPS results of the surface-segregating property of a TPU specimen to which an ATRP cyclic oligomer (cpBrVE) was added according to one embodiment of the present invention, wherein (a) shows a Br3d peak, and (b) shows a C1s peak.
FIG. 15 shows the XPS results of the surface-segregating properties of PS specimens to which an ATRP cyclic oligomer (cpBrVE) was added according to one embodiment of the present invention.
FIG. 16 shows the XPS results of the surface-segregating properties of PMMA specimens to which an ATRP cyclic oligomer (cpBrVE) was added according to one embodiment of the present invention.
FIG. 17 shows the XPS results of the surface-segregating properties of PVDF specimens to which an ATRP cyclic oligomer (cpBrVE) was added according to one embodiment of the present invention.
FIG. 18 shows the results of a cytotoxicity test for TPU specimens to which an ATRP cyclic oligomer (cpBrVE) was added according to one embodiment of the present invention.
FIG. 19 shows the results of establishing the time for optimizing the formation of a polymer brush, obtained by water contact angle measurements of TPU specimens in which anti-fouling polymer brushes are formed according to one embodiment of the present invention.
FIG. 20 shows the results of verifying the formation of polymer brushes of TPU specimens in which anti-fouling polymer brushes are formed according to one embodiment of the present invention, wherein (a) shows FT-IR results, (b) shows XPS (S2p peak) results, and (c) shows water contact angles.
FIG. 21 shows the AFM results of the surface morphology of TPU specimens in which anti-fouling polymer brushes are formed according to one embodiment of the present invention.
FIG. 22 shows the SEM results of the surface morphology of TPU specimens in which anti-fouling polymer brushes are formed according to one embodiment of the present invention.
FIG. 23 shows the results of an albumin adhesion test for TPU specimens in which anti-fouling polymer brushes are formed according to one embodiment of the present invention.
FIG. 24 shows the results of a platelet adhesion test for TPU specimens in which anti-fouling polymer brushes are formed according to one embodiment of the present invention.
FIG. 25 shows the results of a bacterial adhesion test for TPU specimens in which anti-fouling polymer brushes are formed according to one embodiment of the present invention.
FIG. 26 shows the results of measuring water contact angles over time for TPU specimens in which anti-fouling polymer brushes are formed according to one embodiment of the present invention.
FIG. 27 shows the results of (a) FT-IR and (b) water contact angle measurements for TPU specimens in which various polymer brushes are formed according to one embodiment of the present invention.

### [Best Mode]

While investigating surface-segregating materials that can be mixed with biocompatible materials, the present inventors prepared a novel cyclic oligomer through ring-expansion cationic polymerization performed with a cyclic hemiacetal ester-based initiator and a vinyl ether-based monomer. The cyclic oligomer has a surface-segregating property, confirming that it can impart various functionalities (including an anti-fouling property) to the biocompatible material surface. Meanwhile, it was confirmed that an initiator can be immobilized on the surface of a biocompatible material, and polymer brushes with various functionalities (surface roughness, an anti-fouling property, hydrophilicity, and hydrophobicity) can be grafted by a graft-from approach.

Hereinafter, the present invention will be described in detail.

### Cyclic oligomer

The present invention provides a cyclic oligomer represented by Chemical Formula 1 below:

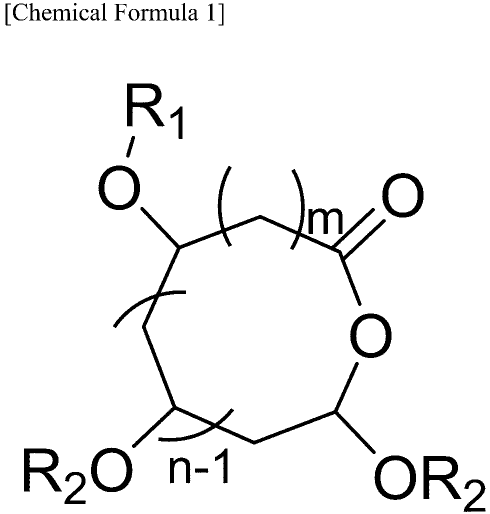

In Chemical Formula 1,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group, and
the sum of 2n and m is an integer from 10 to 600.

The cyclic oligomer may have a surface-segregating property. That is, when the cyclic oligomer is applied as a surface-segregating material, it has the advantage of imparting various functionalities (an anti-fouling property) to a biocompatible material surface. Therefore, by mixing the cyclic oligomer with various biocompatible materials, a surface-modifying compounding material may be prepared to modify the surface of medical products.

Meanwhile, the cyclic oligomer with a surface-segregating property may be applied to initiate actions (polymerization initiation) for various polymerization reactions. That is, when the cyclic oligomer is applied as a surface-segregating material, it has the advantage of immobilizing an initiator on the surface of a compounding material described later. Therefore, by mixing the cyclic oligomer with various biocompatible materials, a compounding material with a surface-immobilized initiator may be prepared, and by using a surface-immobilized initiator, polymer brushes may be bonded and grafted by a graft-from approach. Particularly, the polymer brushes may be grafted with high density, thereby imparting various functionalities such as surface roughness, an anti-fouling property, hydrophilicity and hydrophobicity depending on the properties of the polymer brushes, which can be used to treat the surface of medical items.

Specifically, in Chemical Formula 1, the functional group R₁ is derived from a cyclic hemiacetal ester-based initiator described later, and may be a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group. More specifically, the functional group R₁ may be substituted or unsubstituted, and in some cases, the functional group R₁ may be substituted in various ways with one or more of a halogen group, a hydroxyl group, a carbonyl group, an amine group, an aldehyde group, a thiol group, and a carboxyl group. The total carbon number of the functional group R₁ may be at most 15, and preferably, at most 10, but the present invention is not limited thereto.

In addition, in Chemical Formula 1, the functional group R₂ is derived from a vinyl ether-based monomer described later, and first, the functional group R₂ may be a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group. More specifically, the functional group R₂ may be substituted or unsubstituted, and in some cases, the functional group R₂ may be substituted in various ways with one or more of a halogen group, a hydroxyl group, a carbonyl group, an amine group, an aldehyde group, a thiol group, and a carboxyl group. The functional group R₂ is a functional group affecting the surface-segregating property, the total carbon number of the functional group R₂ may be at most 15, and preferably at most 10, but the present invention is not limited thereto. Here, it can be seen that as the total carbon number of the functional group R₂ increases excessively, the surface-segregating property rather decreases.

Alternatively, the functional group R₂ may be a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, and may be a form in which a functional group (R_{2'}) with fewer than 15 carbon atoms is additionally introduced at the end thereof through a chemical reaction. Specifically, the functional group R_{2'} may be additionally introduced through a chemical reaction between the functional group R₂ and a compound with fewer than 15 carbon atoms, and may include a functional group such as a halogen group, a hydroxyl group, a carbonyl group, an amide group, an aldehyde group, a thiol group, or a carboxyl group. The functional group R₂ and the functional group R_{2'} are functional groups affecting the surface-segregating property, and the total carbon number of each of the functional group R₂ and the functional group R_{2'} may be at most 15, and preferably at most 10, but the present invention is not limited thereto. Here, it can be seen that as the total carbon number of each of the functional group R₂ and the functional group R_{2'} increases excessively, the surface-segregating property rather decreases. For example, the functional group R_{2'} may be a halogen group (F, Cl, Br, or I) or a C1 to C14 alkyl halide. Particularly, a fluorine (F) atom or a C1 to C14 fluoroalkyl group is preferable in terms of the anti-fouling property because it can reduce protein adsorption, but the present invention is not limited thereto.

Meanwhile, the compound with fewer than 15 carbon atoms may include the functional group R_{2'} as well as a chemically reactive functional group (preferably, a click chemically reactive functional group such as a thiol group or an azide group), which can chemically react with the functional group R₂. Here, the compound with fewer than 15 carbon atoms may have the functional group R_{2'} directly connected with the chemically reactive functional group without a hydrocarbon backbone, or have the functional group R_{2'} connected with the chemically reactive functional group via the C1 to C14 hydrocarbon backbone. For example, the C1 to C14 hydrocarbon backbone may be a saturated aliphatic compound, an unsaturated aliphatic compound, an aromatic compound, a heteroaromatic compound, an ether compound, an ester compound, a ketone compound, an amide compound, a zwitterion, or a peptide.

Particularly, when the functional group R₂ is a C2 to C15 alkenyl group or a C2 to C15 alkynyl group, it may be a form in which a functional group (R₂) with fewer than 15 carbon atoms is additionally introduced to the end thereof through a chemical reaction. The chemical reaction may occur between the functional group R₂ and the compound with fewer than 15 carbon atoms. Meanwhile, the compound with fewer than 15 carbon atoms includes the functional group R_{2'} as well as a click chemically reactive functional group such as a thiol group or an azide group, wherein the chemical reaction is preferably a click chemical reaction selected from the group consisting of thiol-ene, thiol-yne, azide-ene, and azide-yne, but the present invention is not limited thereto.

Meanwhile, in Chemical Formula 1, the functional group R₂ is derived from an initiator-derived vinyl ether-based monomer described later, and the functional group R₂ includes functional groups derived from various initiators, and the "initiator-derived functional group" used herein is prepared using an initiator, and refers to a functional group including an initiator. Specifically, the functional group R₂ may include a functional group derived from an atom transfer radical polymerization (ATRP) initiator, a functional group derived from a reversible addition-decomposition chain transfer (RAFT) polymerization initiator, a functional group derived from a nitrooxide-mediated living radical polymerization (NMP) initiator, or a photoiniferter-mediated polymerization (PIMP), and preferably includes an ATRP initiator-derived functional group, but the present invention is not limited thereto. Meanwhile, the functional group R₂ may include a functional group such as a halogen group, an ester group, a hydroxyl group, a carbonyl group, an amine group, an aldehyde group, a thiol group, or a carboxyl group, and preferably includes a halide or an alkyl halide (e.g., a bromide or an α-bromoisobutyryl), but the present invention is not limited thereto. However, the functional group R₂ may be a functional group affecting the surface-segregating property, and the total carbon number of the functional group R₂ may be at most 15, and preferably at most 10, but the present invention is not limited thereto. Here, it can be seen that as the total carbon number of the functional group R₂ increases excessively, surface-segregating property rather decreases.

In addition, in Chemical Formula 1, 2n may be an integer from 10 to 600, and m may be an integer from 2 to 600.

In the case where the cyclic oligomer is applied to a surface-modifying compounding material described later, the number average molecular weight (Mₙ) of the cyclic oligomer may be 5,000 to 20,000, preferably 8,000 to 20,000, and more preferably 15,000 to 20,000, but the present invention is not limited thereto. The number average molecular weight (Mₙ) of the cyclic oligomer may be analyzed by gel permeation chromatography (GPC). Here, as the molecular weight of the cyclic oligomer increases, the surface-segregating property can be seen to increase. Therefore, when the cyclic oligomer is blended with various biocompatible materials to prepare compounding materials for surface modification, it is characterized that an increase in the molecular weight of the cyclic oligomer leads to a decrease in surface roughness and hydrophilicity of the specimen.

Meanwhile, in the case where the cyclic oligomer is applied to a compounding material for polymer brush bonding described later, the number average molecular weight (Mₙ) of the cyclic oligomer may be 5,000 to 15,000, and preferably 9,000 to 11,000, but the present invention is not limited thereto.

### Cyclic hemiacetal ester-based initiator for preparing cyclic oligomer

A cyclic hemiacetal ester-based initiator for preparing the cyclic oligomer, including a compound represented by Chemical Formula 2 below, is provided:

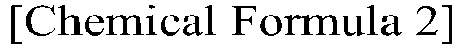

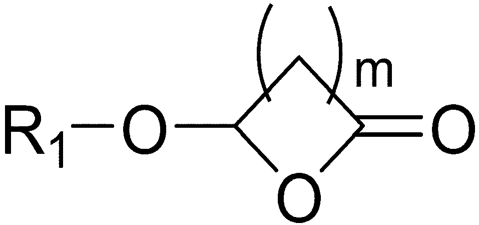

In Chemical Formula 2,
R₁ is a substituted or unsubstituted C1 to C15 alkyl group, C2 to C15 alkenyl group, C2 to C15 alkynyl group, C3 to C15 cycloalkyl group or C6 to C15 aryl group, and
m is an integer from 2 to 600.

In Chemical Formula 2, the functional group R₁ may be a substituted or unsubstituted, C1 to C15 alkyl group, C2 to C15 alkenyl group, C2 to C15 alkynyl group, C3 to C15 cycloalkyl group, C6 to C15 aryl group or C6 to C15 heteroaryl group. More specifically, the functional group R₁ may be substituted or unsubstituted, and in some cases, the functional group R₁ may be substituted in various ways with one or more of a halogen group, a hydroxyl group, a carbonyl group, an amine group, an aldehyde group, a thiol group, and a carboxyl group. The total carbon number of the functional group R₁ may be at most 15, and preferably at most 10, but the present invention is not limited thereto.

A "cyclic oligomer" prepared using the cyclic hemiacetal ester-based initiator has been described above, and thus a redundant description is omitted.

### Vinyl ether-based monomer for preparing cyclic oligomer

The present invention provides a vinyl ether-based monomer for preparing the cyclic oligomer, which includes a compound represented by Chemical Formula 3 below.

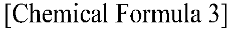

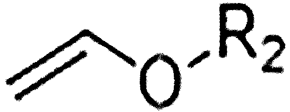

In Chemical Formula 3,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group.

In Chemical Formula 3, the functional group R₂ may be a substituted or unsubstituted, C1 to C15 alkyl group, C2 to C15 alkenyl group, C2 to C15 alkynyl group, C3 to C15 cycloalkyl group, C6 to C15 aryl group or C6 to C15 heteroaryl group. More specifically, the functional group R₂ may be substituted or unsubstituted, and in some cases, the functional group R₂ may be substituted in various ways with one or more of a halogen group, a hydroxyl group, a carbonyl group, an amine group, an aldehyde group, a thiol group, and a carboxyl group. The functional group R₂ is a functional group affecting the surface-segregating property, the total carbon number of the functional group R₂ may be at most 15, and preferably at most 10, but the present invention is not limited thereto. Here, it can be seen that as the total carbon number of the functional group R₂ increases excessively, the surface-segregating property rather decreases.

Alternatively, the functional group R₂ may be a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, and may be a form in which a functional group (R_{2'}) with fewer than 15 carbon atoms is additionally introduced at the end thereof through a chemical reaction. Specifically, the functional group R_{2'} may be additionally introduced through a chemical reaction between the functional group R₂ and a compound with fewer than 15 carbon atoms, and may include a functional group such as a halogen group, a hydroxyl group, a carbonyl group, an amide group, an aldehyde group, a thiol group, or a carboxyl group. The functional group R₂ and the functional group R_{2'} are functional groups affecting the surface-segregating property, and the total carbon number of each of the functional group R₂ and the functional group R_{2'} may be at most 15, and preferably at most 10, but the present invention is not limited thereto. Here, it can be seen that as the total carbon number of each of the functional group R₂ and the functional group R_{2'} increases excessively, the surface-segregating property rather decreases. For example, the functional group R_{2'} may be a halogen group (F, Cl, Br, or I) or a C1 to C14 alkyl halide. Particularly, a fluorine (F) atom or a C1 to C14 fluoroalkyl group is preferable in terms of the anti-fouling property because it can reduce protein adsorption, but the present invention is not limited thereto.

Meanwhile, the compound with fewer than 15 carbon atoms may include the functional group R_{2'} as well as a chemically reactive functional group (preferably, a click chemically reactive functional group such as a thiol group or an azide group), which can chemically react with the functional group R₂. Here, the compound with fewer than 15 carbon atoms may have the functional group R_{2'} directly connected with the chemically reactive functional group without a hydrocarbon backbone, or have the functional group R_{2'} connected with the chemically reactive functional group via the C1 to C14 hydrocarbon backbone. For example, the C1 to C14 hydrocarbon backbone may be a saturated aliphatic compound, an unsaturated aliphatic compound, an aromatic compound, a heteroaromatic compound, an ether compound, an ester compound, a ketone compound, an amide compound, a zwitterion, or a peptide.

Particularly, when the functional group R₂ is a C2 to C15 alkenyl group or a C2 to C15 alkynyl group, it may be a form in which a functional group R_{2'} with fewer than 15 carbon atoms is additionally introduced to the end thereof through a chemical reaction. The chemical reaction may occur between the functional group R₂ and the compound with fewer than 15 carbon atoms. Meanwhile, the compound with fewer than 15 carbon atoms includes the functional group R_{2'} as well as a click chemically reactive functional group such as a thiol group or an azide group, wherein the chemical reaction is preferably a click chemical reaction selected from the group consisting of thiol-ene, thiol-yne, azide-ene, and azide-yne, but the present invention is not limited thereto.

That is, in Chemical Formula 3, the functional group R₂ include functional groups derived from various initiators, including a functional group derived from an atom transfer radical polymerization (ATRP) initiator, a functional group derived from a reversible addition-decomposition chain transfer (RAFT) polymerization initiator, a functional group derived from a nitrooxide-mediated living radical polymerization (NMP) initiator, or a photoiniferter-mediated polymerization (PIMP), and preferably includes an ATRP initiator-derived functional group, but the present invention is not limited thereto. Meanwhile, the functional group R₂ may include a functional group such as a halogen group, an ester group, a hydroxyl group, a carbonyl group, an amine group, an aldehyde group, a thiol group, or a carboxyl group, and preferably includes a halide or an alkylhalide (e.g., a bromide or an α- bromoisobutyryl), but the present invention is not limited thereto. However, the functional group R₂ may be a functional group affecting the surface-segregating property, and the total carbon number of the functional group R₂ may be at most 15, and preferably at most 10, but the present invention is not limited thereto. Here, it can be seen that as the total carbon number of the functional group R₂ increases excessively, surface-segregating property rather decreases.

The vinyl ether-based monomer may be prepared by an SN2 reaction between an alcohol with vinyl ether and various inhibitors. Here, in the SN2 reaction, triethylamine may be additionally added, and the reaction may be performed by stirring for approximately 1 to 5 hours at room temperature in the presence of nitrogen gas.

A "cyclic oligomer" prepared using the vinyl ether-based monomer has been described above, and thus a redundant description is omitted.

The present invention provides a method of preparing the cyclic oligomer using ring-expansion cationic polymerization performed on a cyclic hemiacetal ester-based initiator and a vinyl ether-based monomer.

A "cyclic oligomer" prepared using the cyclic hemiacetal ester-based initiator and the vinyl ether-based monomer has been described above, and thus a redundant description is omitted.

Specifically, in the ring-expansion cationic polymerization, 2,6-di-tert-butyl-4-methylpyridine and tin (IV) bromide may be additionally added, and the ring-expansion cationic polymerization may be performed by stirring for approximately 30 minutes to 5 hours in a temperature range from -70 to 0 °C in the presence of nitrogen gas.

### Compounding material

The present invention provides a compounding material including the cyclic oligomer and a biocompatible material.

A "compounding material" used herein refers to a blend or admixture in which two or more materials are physically combined. Such a compounding material may be for surface modification or polymer brush bonding.

A "polymer brush" used herein refers to an assembly of polymer chains grafted onto a substrate in the form of a brush.

First, the compounding material is used in surface modification or surface treatment of various products, particularly, medical products, and includes the cyclic oligomer. The "cyclic oligomer" has been described, so a redundant description is omitted. When a linearized cyclic oligomer is used instead of the cyclic oligomer as a surface-segregating material, the surface-segregating property significantly decreases. Meanwhile, due to the surface-segregating property of the cyclic oligomer, an initiator may be immobilized on the compounding material surface. Subsequently, a polymer brush may be bonded and grafted using the graft-from approach. The surface-segregating property is significantly lowered when using the linearized cyclic oligomer instead of the cyclic oligomer.

Then, the compounding material includes a biocompatible material, and the biocompatible material may include one or more resins selected from the group consisting of polyolefins, polyethylene (PE), polypropylene (PP), polyvinyl chloride (PVC), polytetrafluoroethylene (PTFE), polyvinyl alcohol (PVA), polyvinyl acetate (PVAc), polybutadiene (PB), polystyrene (PS), polymethylacrylate (PMA), polyethylacrylate (PEA), polymethylmethacrylate (PMMA), polyethylmethacrylate (PEMA), polyhydroxyethylmethacrylate (PHEMA), polyvinylpyrrolidone (PVP), polyethers, polyethylene glycol (PEG), polytetrahydrofuran (PTHF), polyethyleneimine (PEI), polyesters, polycarbonate (PC), polylactide (PLA), polyethylene terephthalate (PET), polyketones, polyetheretherketone (PEEK), polyamides, polyurethane (PU), polyacrylamide (PAAm), polysilanes, polysiloxanes, polydimethylsiloxane (PDMS), starch, cellulose, chitosan, hyaluronic acid, alginate, dextran, gelatin, heparin, polypeptides, and polynucleotides, and preferably polyurethane (PU) or polyvinylpyrrolidone (PVP), but the present invention is not limited thereto.

In the compounding material, the content of the cyclic oligomer is preferably 0.1 to 5 wt%, but the present invention is not limited thereto. Even when the cyclic oligomer is added in a small amount as mentioned above, the cyclic oligomer is suitable for surface modification because it can efficiently provide functionality to the compounding material surface due to its surface-segregating property. Meanwhile, even with the above-mentioned low content of the cyclic oligomer, surface segregation may occur, thereby efficiently immobilizing the initiator on the compounding material surface. This content range is suitable for polymer brush bonding.

Particularly, when the compounding material is for surface modification, i) based on the surface, the volume of the cyclic oligomer may be 65 vol% or more (preferably, 80 vol% or more, and more preferably, 90 vol% or more), ii) based on the 7 nm depth from the surface, the cyclic oligomer may have a weight of 10 wt% or more (preferably, 50 wt% or more, and more preferably, 60 wt% or more), or iii) a surface roughness of 2 to 15 nm. The compounding material may ensure the surface volume ratio, surface weight ratio and surface roughness, which are described above, by optimizing the molecular weight of a cyclic oligomer used as the surface-segregating material and the length of a pendent (alkyl group). Here, when a linearized cyclic oligomer, instead of the cyclic oligomer, is used as the surface-segregating material, the surface volume ratio is greatly reduced, or the surface roughness (R_{q}) greatly increases.

For example, in the cyclic oligomer, when the functional group with less than 15 carbons includes a fluorine (F) atom (preferably, a fluoroalkyl group), the compounding material is characterized by its anti-fouling property. The anti-fouling property is due to the reduction in protein adsorption caused by a functional group including a fluorine (F) atom, particularly, a fluoroalkyl group, present in the cyclic oligomer used as the surface-segregating material. The compounding material may have a water contact angle of 110° or more, or a fibrinogen adsorption amount of 1.5 µg/cm² or less.

Meanwhile, when the compounding material is for polymer brush bonding, based on the 7 nm depth from the surface, the molar ratio of the cyclic oligomer may be 45 wt% or more, and preferably, 48 wt% or more.

Specifically, the compounding material may be prepared by solution casting or hot-melt extrusion performed on the cyclic oligomer and the biocompatible material. Afterward, the compounding material may be finally prepared by drying for 10 to 50 hours at a temperature of 10 to 50 °C.

### Composite material for surface treatment

The present invention provides a composite material for surface treatment, which includes the above-described compounding material; and a polymer brush grafted from the compounding material.

First, the composite material for surface treatment includes the compounding material, which is for polymer brush bonding. The "compounding material" has been described, so a redundant description is omitted.

Next, the composite material for surface treatment includes a polymer brush grafted from the compounding material. The polymer brush may secure biocompatibility as well as various functionalities, and various functionalities such as surface roughness, an anti-fouling property, hydrophilicity, and hydrophobicity, may be imparted according to the characteristics of the polymer brush. The polymer brush may be bonded and grafted using an initiator immobilized on the compounding material surface. Particularly, the polymer brush may be grafted with high density using the cyclic oligomer, compared to the case of using a linearized cyclic oligomer.

Specifically, the polymer brush may be based on various materials, specifically, an acrylate-based monomer. More specifically, the polymer brush is preferably based on an acrylate-based zwitterion monomer, or a poly(ethylene glycol)methacrylate (PEGMA) or methylmethacrylate (MMA) monomer, but the present invention is not limited thereto. Meanwhile, when the polymer brush is based on an acrylate-based zwitterion monomer (e.g., 3-[[2-(methacryloyloxy)ethyl]dimethylammonio]propane-1-sulfonate (SBMA)), the zwitterion may have an anti-fouling property by forming a hydration layer. Accordingly, 1) the surface roughness may be 60 to 180 nm, 2) the albumin adsorption amount may be 1 µg/cm² or less, 3) the platelet adhesion amount may be 200 platelets/mm² or less, 4) the *E.coli* adhesion ability may be less than 2×10³ CFU/cm², or the S. aureus adhesion ability may be less than 3×10⁴ CFU/cm², and 5) the water contact angle may be 15° or less initially or after 28 days.

The grafting of the polymer brush may be performed by various polymerization methods such as atom transfer radical polymerization (ATRP), reversible addition-decomposition chain transfer (RAFT) polymerization, nitrooxide-mediated living radical polymerization (NMP), and photoiniferter-mediated polymerization (PIMP), and preferably, ATRP, but the present invention is not limited thereto. Specifically, the grafting of the polymer brush may be performed for 1 to 20 hours in a temperature range from 30 to 80 °C, and preferably, for 10 to 20 hours in a temperature range from 40 to 60 °C, but the present invention is not limited thereto.

### Surface-modified or surface-treated medical products

The present invention provides a medical product which is surface-modified or surface-treated using the above-described compounding material.

The medical product may be surface-modified or surface-treated using the compounding material, and the "compounding material" has been described, and thus a redundant description is omitted.

When the medical product is a bio-contact type and/or an implantable type, it is preferable that biocompatibility and biofunctionality can be imparted due to the compounding material, but the present invention is not limited thereto.

The medical products (prosthetic devices) may include surgical items, filters, and medical devices. Specifically, the surgical items may include one or more selected from the group consisting of surgical caps, surgical sheets, surgical cover garments, surgical gowns, surgical masks, surgical gloves, and surgical drapes, the filters may include one or more selected from the group consisting of respirator filters, water filters, air filters, and face mask filters, and the medical devices may include one or more selected from the group consisting of artificial heart valves, cardiac assist devices, dialysis circuits, extracorporeal membrane oxygenation devices, catheters, stents, prosthetic implants, artificial sphincters, and drug delivery devices.

As examined above, the present invention relates to a cyclic oligomer, a method of preparing the same, a compound material and a composite material including the same, and a medical product which is surface-modified or surface-treated therewith. Here, the cyclic oligomer may be prepared through ring-expansion cationic polymerization with a cyclic hemiacetal ester-based initiator and a vinyl ether-based monomer, and exhibit a surface-segregating property.

When the cyclic oligomer is applied as a surface-segregating material, there is the advantage of imparting various functionalities (an anti-fouling property, etc.) to the surface of a biocompatible material. Therefore, by mixing the cyclic oligomer with various biocompatible materials, compounding materials for surface modification may be prepared to modify the surface of medical products.

Meanwhile, the cyclic oligomer is for initiating various polymerization reactions, and is characterized by enabling bonding and grafting polymer brushes using a surface-immobilized initiator. Particularly, the polymer brush is grafted with high density, thereby imparting various functionalities, including surface roughness, an anti-fouling property, hydrophilicity, and hydrophobicity, depending on the properties of the polymer brush, which can be used to treat the surface of medical items.

Hereinafter, preferred examples will be presented to allow the present invention to be better understood. However, the following examples are merely provided in order for the present invention to be more easily understood, and the content of the present invention is not limited by the following examples.

### <Examples>

### Example 1-1: Synthesis of cyclic hemiacetal ester initiator

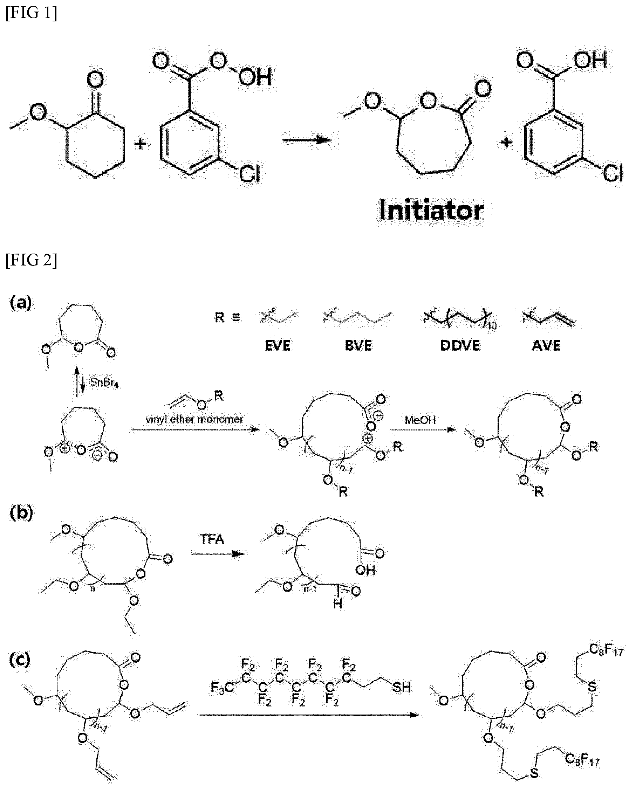

A cyclic hemiacetal ester initiator was prepared from cyclohexanone with a methoxy functional group through a Baeyer-Villiger oxidation reaction. The schematic diagram illustrating the synthesis of the cyclic hemiacetal ester initiator is shown in FIG. 1.

1.09 g of sodium bicarbonate (TCl), 2.935 g of 3-chloroperbenzoic acid (Sigma-Aldrich), 1.28 mL of 2-methoxycyclohexanone (TCI), chloroform (Sigma-Aldrich), a saturated aqueous solution of sodium sulfite (Sigma-Aldrich), a saturated aqueous solution of sodium bicarbonate (TCI), a saturated aqueous solution of sodium chloride (Samchun), and sodium sulfate (Sigma-Aldrich) were prepared.

After removing moisture from a 3-neck round bottom flask, sodium bicarbonate, 50 mL of chloroform, and 3-chloroperbenzoic acid were sequentially added. Subsequently, 2-methoxycyclohexanone was added little by little over 30 minutes at a temperature of 0 °C and stirred for an additional 30 minutes in the presence of nitrogen gas. The resulting synthesized material was washed with a saturated aqueous solution of sodium sulfite to terminate the reaction. The solution whose reaction had been terminated was sequentially washed with a saturated aqueous solution of sodium bicarbonate and a saturated aqueous solution of sodium chloride to remove acids and moisture. Subsequently, the remaining moisture in the solution was additionally removed with sodium sulfate, followed by filtering, and finally a solvent of the product was removed using a rotary evaporator. The obtained product was stored in the form of a highly viscous liquid at a temperature of -20 °C.

### Example 1-2: Synthesis of cyclic oligomer using ethyl vinyl ether

Cyclic oligomers (cpEVE-5k, cpEVE-10k, and cpEVE-20k) were synthesized through ring-expansion cationic polymerization of ethyl vinyl ether with the cyclic hemiacetal ester initiator prepared in Example 1-1. The schematic diagram illustrating the synthesis of the cyclic oligomers using ethyl vinyl ether is shown in FIG. 2A.

Ethyl vinyl ether (TCI) and toluene (Sigma-Aldrich) were prepared by removing moisture using potassium hydroxide pellets (Sigma-Aldrich), and 1.54 mg of 2,6-di-tert-butyl-4-methylpyridine (Sigma-Aldrich), 109.6 mg of tin (IV) bromide (Sigma-Aldrich), 36 mg of the cyclic hemiacetal ester initiator prepared in Example 1-1 and methanol (Sigma-Aldrich) were prepared.

After removing moisture from a 3-neck round bottom flask, 50 mL of toluene was added, and 0.73, 2.18, or 3.64 mL of ethyl vinyl ether was added depending on an experiment at a temperature of -40 °C. Afterward, 2,6-di-tert-butyl-4-methylpyridine, tin (IV) bromide and the cyclic hemiacetal initiator prepared in Example 1-1 were sequentially added, and then stirred in the presence of nitrogen gas for 1 hour. A soon as the reaction time ended, the product was mixed with 4 °C methanol to terminate the reaction. After the reaction was completed, the product was washed in a funnel containing deionized water, and finally, the solvent of the product was removed using a rotary evaporator.

### Example 1-3: Synthesis of cyclic oligomer using butyl vinyl ether

A cyclic oligomer (cpBVE-8k) was synthesized through ring-expansion cationic polymerization of butyl vinyl ether with the cyclic hemiacetal ester initiator prepared in Example 1-1. The schematic diagram illustrating the synthesis of the cyclic oligomer using butyl vinyl ether is shown in FIG. 2A.

Butyl vinyl ether (Sigma-Aldrich) and toluene (Sigma-Aldrich) were prepared by removing moisture using potassium hydroxide pellets (Sigma-Aldrich), and 1.54 mg of 2,6-di-tert-butyl-4-methylpyridine (Sigma-Aldrich), 109.6 mg of tin (IV) bromide (Sigma-Aldrich), 36 mg of the cyclic hemiacetal ester initiator prepared in Example 1-1 and methanol (Sigma-Aldrich) were prepared.

After removing moisture from a 3-neck round bottom flask, 50 mL of toluene was added, and 1.85 mL of butyl vinyl ether was added at a temperature of -40 °C. Afterward, 2,6-di-tert-butyl-4-methylpyridine, tin (IV) bromide and the cyclic hemiacetal initiator prepared in Example 1-1 were sequentially added, and then stirred in the presence of nitrogen gas for 1 hour. A soon as the reaction time ended, the product was mixed with 4 °C methanol to terminate the reaction. After the reaction was completed, the product was washed in a funnel containing deionized water, and finally, the solvent of the product was removed using a rotary evaporator.

### Example 1-4: Synthesis of cyclic oligomer using dodecyl vinyl ether

A cyclic oligomer (cpDDVE-16k) was synthesized through ring-expansion cationic polymerization of dodecyl vinyl ether with the cyclic hemiacetal ester initiator prepared in Example 1-1. The schematic diagram illustrating the synthesis of the cyclic oligomer using dodecyl vinyl ether is shown in FIG. 2A.

Dodecyl vinyl ether (Sigma-Aldrich) and toluene (Sigma-Aldrich) ) were prepared by removing moisture using potassium hydroxide pellets (Sigma-Aldrich), and 1.54 mg of 2,6-di-tert-butyl-4-methylpyridine (Sigma-Aldrich), 109.6 mg of tin (IV) bromide (Sigma-Aldrich), 36 mg of the cyclic hemiacetal ester initiator prepared in Example 1-1 and methanol (Sigma-Aldrich) were prepared.

After removing moisture from a 3-neck round bottom flask, 50 mL of toluene was added, and 10.5 mL of dodecyl vinyl ether was added at a temperature of -40 °C. Afterward, 2,6-di-tert-butyl-4-methylpyridine, tin (IV) bromide and the cyclic hemiacetal initiator prepared in Example 1-1 were sequentially added, and then stirred in the presence of nitrogen gas for 1 hour. A soon as the reaction time ended, the product was mixed with 4 °C methanol to terminate the reaction. After the reaction was completed, the product was washed in a funnel containing deionized water, and finally, the solvent of the product was removed using a rotary evaporator.

### Example 1-5: Synthesis of cyclic oligomer using allyl vinyl ether

A cyclic oligomer (cpAVE-5k) was synthesized through ring-expansion cationic polymerization of allyl vinyl ether with the cyclic hemiacetal ester initiator prepared in Example 1-1. The schematic diagram illustrating the synthesis of the cyclic oligomer using allyl vinyl ether is shown in FIG. 2A.

Allyl vinyl ether (Thermo Fisher Scientific) and toluene (Sigma-Aldrich) ) were prepared by removing moisture using potassium hydroxide pellets (Sigma-Aldrich), and 1.54 mg of 2,6-di-tert-butyl-4-methylpyridine (Sigma-Aldrich), 109.6 mg of tin (IV) bromide (Sigma-Aldrich), 36 mg of the cyclic hemiacetal ester initiator prepared in Example 1-1 and methanol (Sigma-Aldrich) were prepared.

After removing moisture from a 3-neck round bottom flask, 50 mL of toluene was added, and 5.13 mL of allyl vinyl ether 1 was added at a temperature of -40 °C. Afterward, 2,6-di-tert-butyl-4-methylpyridine, tin (IV) bromide and the cyclic hemiacetal initiator prepared in Example 1-1 were sequentially added, and then stirred in the presence of nitrogen gas for 1 hour. A soon as the reaction time ended, the product was mixed with 4 °C methanol to terminate the reaction. After the reaction was completed, the product was washed in a funnel containing deionized water, and finally, the solvent of the product was removed using a rotary evaporator.

### Comparative Example 1-1: Linearization of cyclic oligomer using ethyl vinyl ether

The cyclic oligomer (cpEVE-5k) prepared in Example 1-2 was linearized by cleaving the hemiacetal ester bond through acidolysis (IpEVE-5k). The schematic diagram of the linearization of the cyclic oligomer using ethyl vinyl ether is shown in FIG.2B.

1 wt% ethyl vinyl ether solution in 20 mL of THF was added to a vial, 1 mL of a H₂O/TFA (1/2 v/v) solution was added, and then the resulting mixture was stirred for 1 hour at room temperature. Subsequently, the solution was added to 2 g of Amberlyst^{®} A21 free base to remove the remaining acid and filtered, and finally the solvent of the product was removed in a vacuum oven.

### Example 1-6: Functionalization of cyclic oligomer using allyl vinyl ether

The functionalization of the cyclic oligomer (cpAVE-5k) prepared in Example 1-5 is performed through a thiol-ene click chemistry reaction, and the attachment of a C10 fluoroalkyl group imparted functionality (cpAVE-F). The schematic diagram of the functionalization of the cyclic oligomer using allyl vinyl ether is shown in FIG. 2C.

Dichloromethane (Sigma-Aldrich) was prepared by removing moisture using potassium hydroxide pellets (Sigma-Aldrich), and the cyclic oligomer (cpAVE-5k) prepared in Example 1-5, 2,2-azobisisobutyronitrile (Junsei Chemical), and methanol (Sigma-Aldrich) were prepared.

After removing moisture from a 3-neck round bottom flask, 10 mL of dichloromethane was added, and the cyclic oligomer (cpAVE-5k) prepared in Example 1-5 and 2,2-azobisisobutyronitrile were sequentially added, and then the resulting mixture was stirred at room temperature in the presence of nitrogen gas for 24 hours. A soon as the reaction time ended, the solvent was removed using a rotary evaporator. The resulting slurry was washed by mixing with methanol using a centrifuge, and the remaining solvent was removed in a vacuum hood.

### Example 1-7: Analyses (NMR, GPC, DSC) of cyclic hemiacetal ester initiator and cyclic oligomers

### (1) Analysis of cyclic hemiacetal ester initiator

The synthesis of the cyclic hemiacetal ester initiator prepared in Example 1-1 was confirmed by proton nuclear magnetic resonance (¹H NMR), and the analysis results are shown in FIG. 3A.

### (2) Analyses of cyclic oligomers

The synthesis of the cyclic oligomers (cpEVE-5k, cpEVE-10k, cpEVE-20k, cpBVE-8k, cpDDVE-16k, and cpAVE-5k) prepared in Examples 1-2 to 1-5 was confirmed by gel permeation chromatography (GPC) and proton NMR, and the results are shown in FIGS. 3B and 3C.

According to the GPC analysis results, it can be confirmed that cpEVE-5k, cpEVE-10k, and cpEVE-20k were ethyl vinyl ether-based cyclic oligomers, and the number average molecular weights (Mₙ) thereof were approximately 5,800, 12,200 and 18,900, respectively, and the molecular weights of the other vinyl ether-based cyclic oligomers were also presented (FIG. 3B).

In addition, according to the proton NMR analysis results, it can be confirmed that cpEVE-5k, cpEVE-10k, cpEVE-20k, cpBVE-8k, cpDDVE-16k, and cpAVE-5k showed peaks a, b and c at 3.46 ppm, 1.59 ppm, and 3.97 ppm, indicating protons present in the structure of the vinyl ether main chain. The protons present in a pendent were also confirmed by proton NMR. Specifically, the proton located at a methyl group of the ethyl vinyl ether-based cyclic oligomer can be confirmed by the peak at 1.16 ppm, the proton located at the vinyl group of the allyl vinyl ether-based cyclic oligomer can be confirmed by the peaks at 1.85 ppm, 2.81 ppm, 2.79 ppm, and 2.73 ppm, and for the other vinyl ether-based cyclic oligomers, peaks corresponding to respective pendants were also presented ((a) to (f) in FIGS. 3C).

### (3) Analyses of linearized cyclic oligomer

The linearized cyclic oligomer (IpEVE-5k) prepared in Comparative Example 1 was confirmed by gel permeation chromatography (GPC) and proton NMR, and the analysis results are shown in FIGS. 3B and 3C. In addition, the linearized cyclic oligomer (IpEVE-5k) prepared in Comparative Example 1 was analyzed by small angle X-ray scattering (SAXS), differential scanning calorimetry (DSC), and gel permeation chromatography (GPC), and the analysis results are shown in FIG. 3D.

According to the proton NMR results, when comparing cpEVE-5k and 1pEVE-5k, it can be confirmed that, after linearization, a small peak was observed at approximately 9.5 ppm, which is because an aldehyde group was generated at the end of the main chain due to linearization ((a) and (g) in FIG. 3C).

As another analysis, SAXS was performed, and the analysis results were converted to a Guinier plot. Afterward, according to the Guinier law, the radius of gyration was calculated, thereby confirming that cpEVE-5k and 1pEVE-5k have radii of gyration of approximately 6.68 nm and 7.14 nm. The smaller radius of gyration of the cyclic oligomers compared to linear oligomers can be interpreted as resulting from the restricted conformation of the chain ((a) in FIG. 3D).

As a result of measuring a glass transition temperature by DSC as still another analysis, it was confirmed that cpEVE-5k and 1pEVE-5k have glass transition temperatures of approximately -33 °C and -44 °C, respectively. The fact that cpEVE-5k has a slightly higher glass transition temperature can be interpreted as resulting from less fluidity caused by the restricted conformation, a smaller size and the absence of the chain end of the cyclic oligomer ((b) in FIG. 3D).

As a result of assessing sizes by GPC as the final analysis, it could be confirmed that cpEVE-5k has a smaller size than lpEVE-5k, like the result of the radius of gyration ((c) in FIG. 3D).

### (4) Analysis of functionalized cyclic oligomer

The synthesis of the functionalized cyclic oligomer (cpAVE-F) prepared in Example 1-6 was confirmed by proton NMR, and the analysis results are shown in FIG. 3C.

According to the proton NMR results, for cpAVE-F, protons located in pendants were able to be confirmed by the peaks at 1.85 ppm, 2.81 ppm, 2.79 ppm, and 2.73 ppm ((h) of FIG. 3C).

### Example 1-8: Preparation of TPU specimens to which cyclic oligomers were added

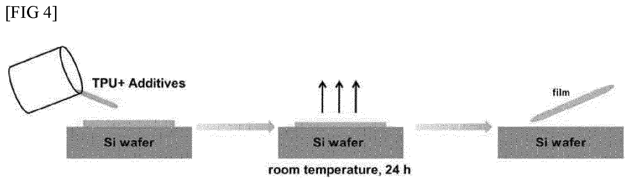

As a compounding material to which a cyclic oligomer was added, TPU specimens were prepared by a solution casting method. The schematic diagram of the preparation of TPU specimens to which cyclic oligomers were added by a solution casting method is shown in FIG. 4.

The used thermoplastic polyurethane (TPU) was K-480A produced by Kolon Industries, and the used cyclic oligomers were the oligomers (cpEVE-5k, cpEVE-10k, cpEVE-20k, cpBVE-8k, cpDDVE-16k, cpAVE-5k, cpAVE-F, and IpEVE-5k) prepared in Examples 1-2 to 1-6 and Comparative Example 1-1.

To prepare TPU specimens, 1 mg of an oligomer, 99 mg of TPU, and 10 mL of dichloromethane were added to a 30 mL vial and dissolved, and the resulting solution was stored for 5 hours after sonication to remove bubbles. Afterward, 60 µL of the prepared solution was solution-casted on a 1 x 1 cm² silicon wafer and detached after evaporation at room temperature for 24 hours, thereby preparing TPU specimens.

### Example 1-9: Preparation of PVP specimens to which cyclic oligomers were added

As a compounding material to which a cyclic oligomer was added, a PVP specimen was prepared by a solution casting method in the same manner as the preparation of the TPU specimen.

The used polyvinylpyrrolidone (PVP) was a 40,000 Mw product produced by Sigma-Aldrich, and the used cyclic oligomers were the oligomers (cpEVE-5k and IpEVE-5k) prepared in Example 1-2 and Comparative Example 1-1.

### Example 1-10: Analyses of TPU specimens to which cyclic oligomers were added

### (1) Comparative analysis of surface-segregating properties between cyclic oligomer and linearized cyclic oligomer

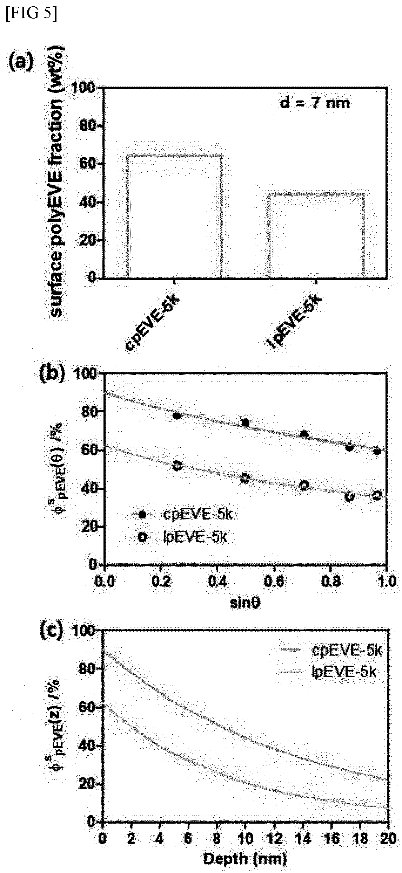

To investigate the surface-segregating properties of the TPU specimens to which the cyclic oligomers (cpEVE-5k and lpEVE-5k) were added, prepared in Example 1-8, X-ray photoelectron spectroscopy (XPS) and angle resolved X-ray photoelectron spectroscopy (AR-XPS) were performed. The analysis results were converted into a C=O bond ratio using a peak deconvolution method, and the substituted C=O bond ratio was converted into a weight ratio of oligomers located on the TPU specimen surface. The analysis results are shown in FIG. 5. Here, the oligomers added to the TPU specimens were set as the sample names.

TPU has many C=O bonds, but cyclic oligomers have almost no C=O bonds. According to the XPS analysis results based on these characteristics, within the 7 nm range from the TPU specimen surface, cpEVE-5k was confirmed to have a higher weight ratio than 1pEVE-5k (FIG. 5A).

In addition, according to the AR-XPS analysis results, it is confirmed that cpEVE-5k was located on the TPU specimen surface approximately 1.5 times more than IpEVE-5k (FIGS. 5B and 5C).

### (2) Comparative analysis of surface-segregating properties according to molecular weights/pendant (alkyl group) lengths of cyclic oligomers

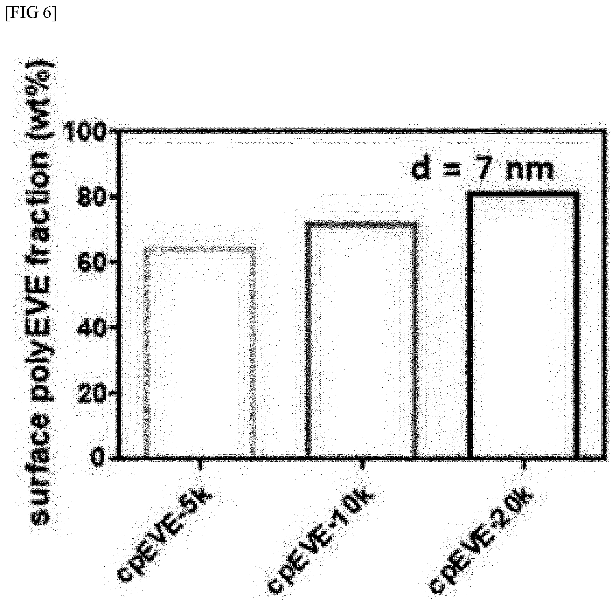

To investigate the surface-segregating properties of the TPU specimens to which the cyclic oligomers (cpEVE-5k, cpEVE-10k and cpEVE-20k) were added, prepared in Example 1-8, that is, the TPU specimens to which ethyl vinyl ether-based cyclic oligomers with different molecule weights were added, X-ray photoelectron spectroscopy (XPS) was used. The analysis results are shown in FIG. 6.

According to the XPS analysis results, for cyclic oligomers with a number average molecular weight of approximately 20,000, it was confirmed that as the molecular weight of the cyclic oligomer increased, the weight ratio of the cyclic oligomer located on the surface of a TPU specimen increased. Conversely, it was confirmed that the molar ratio of the cyclic oligomer located on the TPU specimen surface decreased (FIG. 6). Meanwhile, as the pendant (alkyl group) length of the cyclic oligomer increased, the weight ratio of the cyclic oligomer located on the surface of the TPU specimen showed a trend of increasing and then decreasing, thereby confirming that there is a pendant (alkyl group) length that can optimize the surface-separating properties.

### (3) Comparative analysis of surface morphology and hydrophilicity according to surface-segregating properties of cyclic oligomers

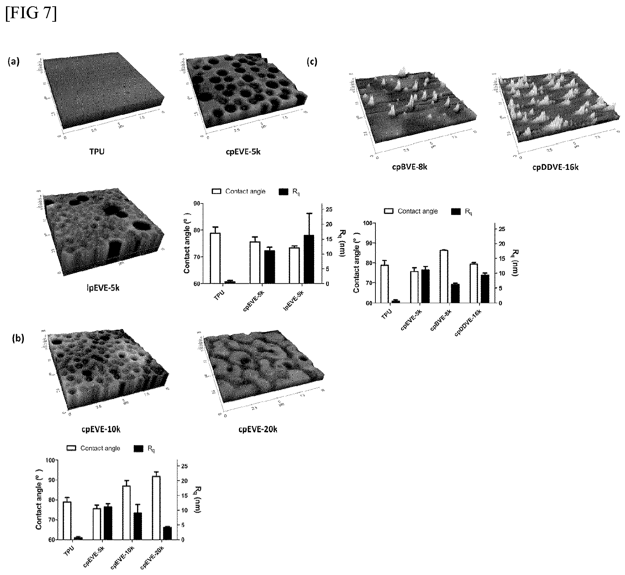

To verify the surface morphology and hydrophilicity of the TPU specimens to which the functionalized cyclic oligomers (cpEVE-5k, cpEVE-10k, cpEVE-20k, cpBVE-8k, cpDDVE-16k, and lpEVE-5k) were added, prepared in Example 1-8, atomic force microscopy (AFM) and water contact angle measurement were used. The analysis results are shown in FIG. 7.

According to the AFM analysis results, on both surfaces of the cpEVE-5k - TPU specimen and the IpEVE-5k - TPU specimen, phase separation phenomena were not observed, and surface roughness tended to increase in the order of the TPU specimen, the cpEVE-5k - TPU specimen, and the IpEVE-5k - TPU specimen. On the other hand, the water contact angle tended to decrease, indicating that the surface roughness affected hydrophilicity according to the Wenzel model (FIG. 7A).

In addition, as the molecular weights of the cyclic oligomers increased in the order of the cpEVE-5k - TPU specimen, the cpEVE-10k - TPU specimen and the cpEVE-20k - TPU specimen, it was confirmed that the phase separation phenomena were observed, and it was confirmed that the cpEVE-5k - TPU specimen exhibited the highest surface roughness and then the surface roughness decreased as the molecular weight increased afterward. On the other hand, the water contact angle increased as the molecular weight of the cyclic oligomer increased, and likewise, it can be seen that the surface roughness of the TPU specimen affected hydrophilicity according to the Wenzel model (FIG. 7B).

In addition, as the pendant (alkyl group) length of the cyclic oligomer increased, the protruding structure on the TPU specimen surface was confirmed. In addition, it was confirmed that the surface roughness of the TPU specimen decreased and then increased as the pendant (alkyl group) length of the cyclic oligomer increased. On the other hand, although the water contact angle exhibits hydrophobicity with an increased length of alkyl group, it was confirmed that the hydrophilicity of the TPU specimen surface decreased and then increased as the pendant (alkyl group) length of the cyclic oligomer increased. As confirmed in FIG. 6, it can be seen that the low surface segregation of cpDDVE-16k affects the surface morphology (FIG. 7C).

### (4) Verification of functionality according to functionalized cyclic oligomer

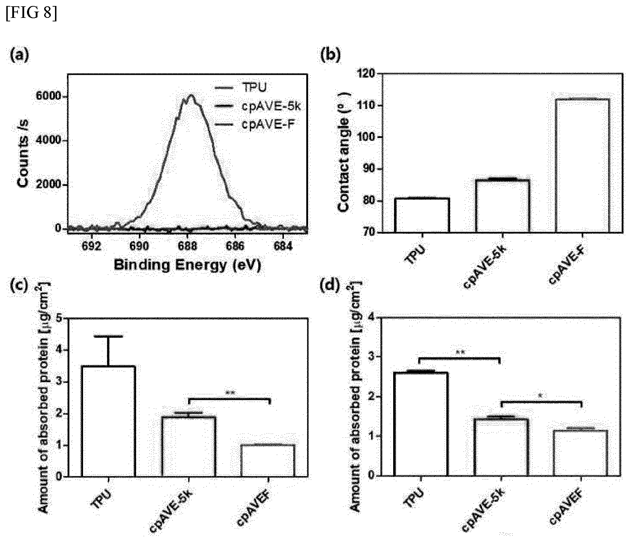

To verify the functionalities of the TPU specimens to which the functionalized cyclic oligomers (cpAVE-5k and cpAVE-F) were added, prepared in Example 1-8, X-ray photoelectron spectroscopy (XPS), water contact angle measurement, and protein adsorption assay were performed. The analysis results are shown in FIG. 8.

According to the XPS analysis results, unlike the TPU specimen or the cpAVE-5k-added TPU specimen, in the cpAVE-F-added TPU specimen, a large amount of fluorine was observed due to the fluoroalkyl group present in cpAVE-F (FIG. 8A).

In addition, according to the water contact angle analysis results, in the cpAVE-F-added TPU specimen, it is confirmed that hydrophobicity greatly increased. This is because the fluoroalkyl group present in cpAVE-F is a hydrophobic group, and it can be seen that the surface properties changed significantly with only 1 wt% addition, resulting in surface segregation (FIG. 8B).

Finally, according to the protein adsorption analysis results, since the fluoroalkyl group present in cpAVE-F has an effect of preventing protein adsorption, it was confirmed that a great decrease in protein adsorption, that is, an anti-fouling effect, was observed in the cpAVE-F-added TPU specimen (FIGS. 8C and 8D).

### Example 1-11: Analysis of PVP specimens to which cyclic oligomers were added

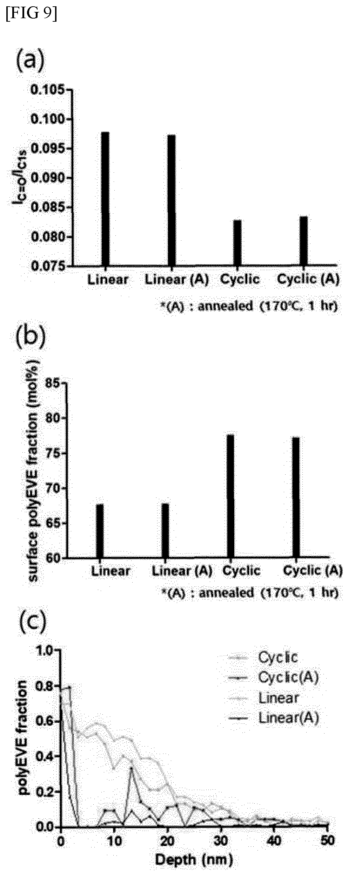

To investigate the surface-segregating properties of PVP specimens to which the cyclic oligomers (cpEVE-5k and lpEVE-5k) were added, prepared in Example 1-9, X-ray photoelectron spectroscopy (XPS) and time-of-flight secondary ion mass spectrometry (TOF-SIMS) were performed. The analysis results are shown in FIG. 9.

First, polyvinylpyrrolidone has many C=O bonds, but cyclic oligomers have almost no C=O bonds. Second, polyvinylpyrrolidone has nitrogen atoms, but cyclic oligomers don't. According to the XPS analysis results based on these characteristics, a low ratio of C=O bonds to total carbon bonds was observed on the surface of the PVP specimen, confirming that a lot of cpEVE-5k has relatively moved to the surface (FIG. 9A).

In addition, as a result of confirming the mass ratio of nitrogen atoms on the surface of the PVP specimen and then converting it to a mole fraction, likewise, it was confirmed that a lot of cpEVE-5k has relatively moved to the surface (FIG. 9B).

According to the TOF-SIMS analysis results, like the XPS analysis results, it is confirmed that cpEVE-5k is relatively abundant on the outermost surface of the PVP specimen (FIG. 9C).

Accordingly, it can be seen that the cyclic oligomer can be applied as an additive in various materials compared to linearized cyclic oligomers.

### Example 2-1: Synthesis of vinyl ether-based monomer (BrVE) derived from ATRP initiator

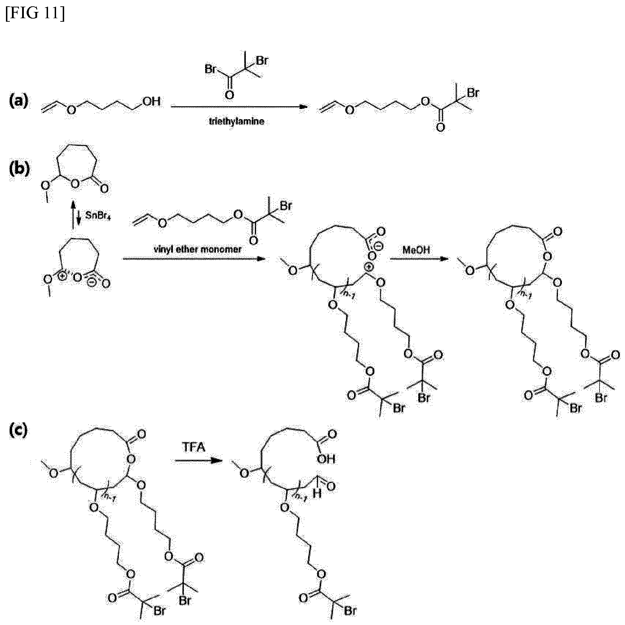

An ATRP initiator-derived vinyl ether-based monomer was prepared by a Williamson ether synthesis reaction with an alcohol containing vinyl ether and an ATRP initiator containing a bromide functional group. The reaction is an SN2 reaction where an alcohol acts as a nucleophile, and the schematic diagram of the synthesis of the ATRP initiator-derived vinyl ether-based monomer (BrVE) is shown in FIG. 11A.

Specifically, 50 mL dichloromethane was added to a 250 mL round flask which was previously heated and dried, and the temperature was lowered to 0 °C. Afterward, 6.38 g of 1,4-butanediol vinyl ether and 11.5 g of triethylamine were uniformly dissolved in a solvent by stirring, and then 11.5g of α-bromoisobutyryl was slowly added to the solution. The temperature of the prepared solution was raised from 0 °C to room temperature, and stirred for 3 hours. Afterward, the resulting solution was washed with 50 mL of distilled water to terminate the reaction, and washed three more times using 50 mL of saturated ammonium chloride solution. Afterward, anhydrous magnesium sulfate was added to remove moisture in the organic solution, the organic solution was concentrated at low pressure and purification was performed by silica gel column chromatography. The column's eluent was a mixture of normal hexane and ethyl acetate in a ratio of 39: 1. Finally, after purification, a transparent organic compound, 4-vinyloxybutyl 2-bromomethylpropanoate, was obtained.

### Example 2-2: Synthesis of cyclic oligomer using ATRP initiator-derived vinyl ether-based monomer (cpBrVE)

An ATRP cyclic oligomer (cpBrVE) was synthesized by ring-expansion cationic polymerization of the ATRP initiator-derived vinyl ether-based monomer (BrVE) prepared in Example 2-1 with a cyclic hemiacetal ester. The schematic diagram of the synthesis of the ATRP cyclic oligomer (cpBrVE) is shown in FIG. 11B.

Specifically, toluene (Sigma-Aldrich) was prepared by removing moisture using potassium hydroxide pellets (Sigma-Aldrich), and 1.54 mg of 2,6-di-tert-butyl-4-methylpyridine (Sigma-Aldrich), 109.6 mg of tin (IV) bromide (Sigma-Aldrich), 36 mg of cyclic hemiacetal ester and methanol (Sigma-Aldrich) were prepared.

After removing moisture from a 3-neck round bottom flask, 50 mL of toluene was added, and 5.3 g of the ATRP initiator-derived vinyl ether (BrVE) was added at a temperature of - 40 °C. Afterward, 2,6-di-tert-butyl-4-methylpyridine, tin (IV) bromide and the cyclic hemiacetal material were sequentially added, and then stirred in the presence of nitrogen gas for 5 hours. A soon as the reaction time ended, the product was mixed with 4 °C methanol to terminate the reaction. After the reaction was completed, the product was washed in a funnel containing deionized water, and finally, the solvent of the product was removed using a rotary evaporator.

### Comparative Example 2-1: Linearization of cyclic oligomer using ATRP initiator-derived vinyl ether-based monomer (lpBrVE)

The ATRP cyclic oligomer (cpBrVE) prepared in Example 2-2 was linearized by cleaving a hemiacetal ester bond through acidolysis. The schematic diagram of the ATRP cyclic oligomer linearization (lpBrVE) is shown in FIG. 11C.

Specifically, 1 wt% ethyl vinyl ether solution in 20 mL of THF was added to a vial and 1 mL of a H₂O/TFA (1/2 v/v) solution was added, and then the resulting mixture was stirred for 1 hour at room temperature. Subsequently, the mixture was added to 2 g of Amberlyst^{®} A21 free base to remove the remaining acid and filtered, and finally the solvent of the product was removed in a vacuum oven.

### Example 2-3: Analyses (NMR, GPC, DSC) of ATRP initiator-derived vinyl ether-based monomer (BrVE) and ATRP cyclic oligomer (cpBrVE)

### (1) Analysis of ATRP initiator-derived vinyl ether-based monomer (BrVE)

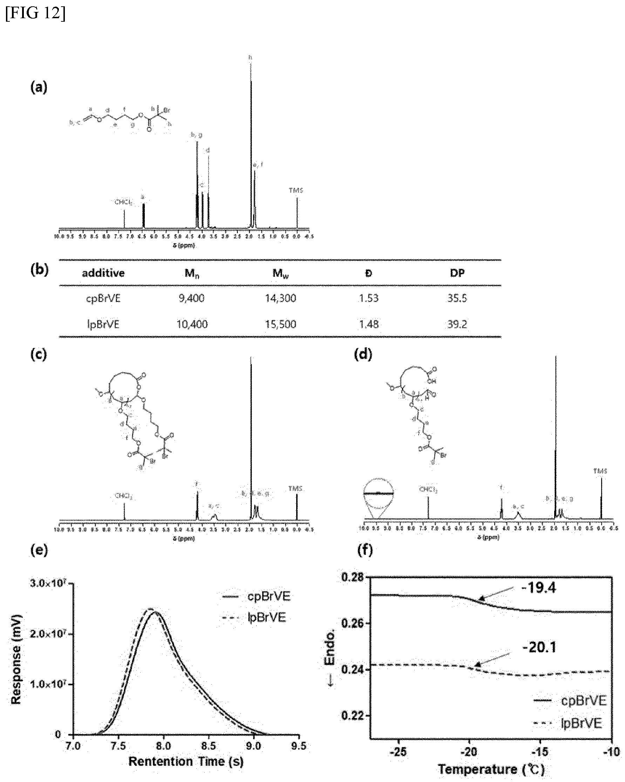

The ATRP initiator-derived vinyl ether-based monomer (BrVE) prepared in Example 2-1 was analyzed by proton nuclear magnetic resonance (¹H NMR) to confirm synthesis, and the analysis results are shown in FIG. 12A.

### (2) Comparative analysis of ATRP cyclic oligomer (cpBrVE) and linearized ATRP cyclic oligomer (lpBrVE)

The ATRP cyclic oligomer (cpBrVE) prepared in Example 2-2 and the linearized ATRP cyclic oligomer (lpBrVE) prepared in Comparative Example 1 were analyzed by gel permeation chromatography (GPC), proton NMR and differential scanning calorimetry (DSC) to confirm synthesis, and the results are shown in FIGS. 12B to 12F.

According to the GPC analysis results, it was confirmed that cpBrVE has a number average molecular weight (Mₙ) of approximately 9,400, and lpBrVE has a number average molecular weight (Mₙ) of approximately 10,400 (FIG. 12B).

In addition, according to the proton NMR analysis results, it was confirmed that cpBrVE showed an f peak at 4.20 ppm, a and c peaks at 3.45 ppm, and b, d, e and g peaks at 1.78 ppm. Comparing cpBrVE and lpBrVE, it was confirmed that, after linearization, lpBrVE has a small peak at approximately 9.5 ppm, which is because an aldehyde group was formed at the end of the main chain due to linearization (FIGS. 12C and 12D).

In addition, according to the DSC analysis results, it was confirmed that cpBrVE and lpBrVE have glass transition temperatures of approximately -19.4 and -20.1 °C, respectively. The glass transition temperature of cpBrVE is somewhat high due to less fluidity caused by a restricted conformation, a smaller size, and the absence of the chain end of the cyclic oligomer (FIGS. 12E and 12F).

### Example 2-4: Preparation of TPU specimen to which ATRP cyclic oligomer (cpBrVE) was added

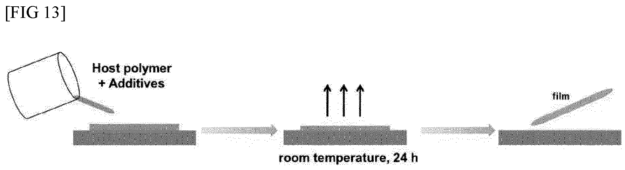

As a compounding material to which a cyclic oligomer was added, a TPU specimen was prepared by a solution casting method. The schematic diagram of the preparation of a TPU specimen to which an ATRP cyclic oligomer was added is shown in FIG. 13.

The used thermoplastic polyurethane (TPU) was Elastollan^{®} S85A10 produced by BASF, and the used cyclic oligomer was the ATRP cyclic oligomer (cpBrVE) prepared in Example 2-2. Meanwhile, the used linearized cyclic oligomer was the linearized ATRP cyclic oligomer (lpBrVE) prepared in Comparative Example 1.

Specifically, 6 mg of cpBrVE, 594 mg of TPU and 10mL of tetrahydrofuran were added to a 30 mL vial and dissolved at 50 °C, and the resulting solution was stored for 5 hours after sonication to remove bubbles. Afterward, the TPU solution was poured into a glass petri dish, solution-casted, evaporated for 24 hours at room temperature and then removed, thereby preparing a cpBrVE-added TPU specimen.

### Example 2-5: Preparation of PS specimen to which ATRP cyclic oligomer (cpBrVE) was added

As a compounding material to which a cyclic oligomer was added, a PS specimen was prepared by a solution casting method. The schematic diagram of the preparation of the ATRP cyclic oligomer-added PS specimen by the solution casting method is shown in FIG. 13.

The used polystyrene (PS) was a product with the average molecular weight of 35,000 produced by Sigma-Aldrich, and the used cyclic oligomer was the ATRP cyclic oligomer (cpBrVE) prepared in Example 2-2. Meanwhile, the used linearized cyclic oligomer was the linearized ATRP cyclic oligomer (lpBrVE) prepared in Comparative Example 1.

Specifically, 6 mg of cpBrVE, 594 mg of PS and 10 mL of tetrahydrofuran were added to a 30 mL vial and dissolved at 50 °C, and the resulting solution was stored for 5 hours after sonication to remove bubbles. Afterward, the PS solution was poured into a glass petri dish, solution-casted, evaporated for 24 hours at room temperature and then removed, thereby preparing a cpBrVE-added PS specimen.

### Example 2-6: Preparation of PMMA specimen to which ATRP cyclic oligomer (cpBrVE) was added

As a compounding material to which a cyclic oligomer was added, a PMMA specimen was prepared by a solution casting method. The schematic diagram of the preparation of the ATRP cyclic oligomer-added PMMA specimen by the solution casting method is shown in FIG. 13.

The used polymethylmethacrylate (PMMA) was a product with an average molecular weight of 120,000 produced by Sigma-Aldrich, and the used cyclic oligomer was the ATRP cyclic oligomer (cpBrVE) prepared in Example 2-2. Meanwhile, the used linearized cyclic oligomer was the linearized ATRP cyclic oligomer (lpBrVE) prepared in Comparative Example 1.

Specifically, 6 mg of cpBrVE, 594 mg of PMMA and 10 mL of tetrahydrofuran were added and dissolved at 50 °C, and the resulting solution was stored for 5 hours after sonication to remove bubbles. Afterward, the PMMA solution was poured into a glass petri dish, solution-casted, evaporated for 24 hours at room temperature and then removed, thereby preparing a cpBrVE-added PMMA specimen.

### Example 2-7: Preparation of PVDF specimen to which ATRP cyclic oligomer (cpBrVE) was added

As a compounding material to which a cyclic oligomer was added, a PVDF specimen was prepared by a solution casting method. The schematic diagram of the preparation of the ATRP cyclic oligomer-added PVDF specimen by the solution casting method is shown in FIG. 13.

The used polyvinylidene fluoride (PVDF) was a product with an average molecular weight of 180,000 produced by Sigma-Aldrich, and the used cyclic oligomer was the ATRP cyclic oligomer (cpBrVE) prepared in Example 2-2. Meanwhile, the used linearized cyclic oligomer was the linearized ATRP cyclic oligomer (lpBrVE) prepared in Comparative Example 1.

Specifically, 6 mg of cpBrVE, 594 mg of PVDF and 10 mL of N,N-dimethylformamide were added to a 30 mL vial and dissolved at 50 °C, and the resulting solution was stored for 5 hours after sonication to remove bubbles. Afterward, the PVDF solution was poured into a glass petri dish, solution-casted, evaporated for 24 hours at room temperature and then removed, thereby preparing a cpBrVE-added PVDF specimen.

### Example 2-8: Analysis of surface-segregating properties of TPU specimen to which ATRP cyclic oligomer (cpBrVE) was added

The surface-segregating properties of the ATRP cyclic oligomer (cpBrVE)-added TPU specimen prepared in Example 2-4 was analyzed by X-ray photoelectron spectroscopy (XPS).

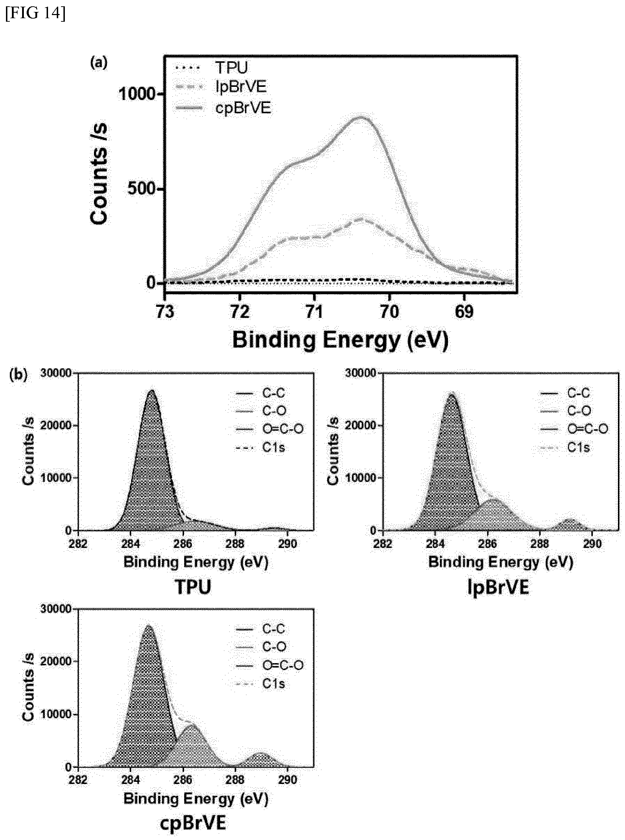

The Br peak analyzed by XPS is shown in FIG. 14A. Here, based on oligomers added to the TPU specimens, the specimens' names were designated as cpBrVE and lpBrVE, respectively. These specimens exhibit a characteristic in which Br ions are not present in TPU, but present only in the oligomer. According to the XPS analysis results based on this characteristic, based on the 7 nm range from the TPU specimen surface, it was confirmed that the proportion of the surface-immobilized cpBrVE was higher than that of the surface-immobilized lpBrVE (FIG. 14A).

In addition, the C1s graph analyzed by XPS is shown in FIG. 14B. Likewise, based on oligomers added to the TPU specimens, the specimens' names were designated as cpBrVE and lpBrVE, respectively. The ratio of C=O bonds analyzed by XPS may be converted into the weight ratio of the oligomer through theoretical calculations. As a result, based on the 7 nm range from the TPU specimen surface, it was confirmed that the weight ratio of the surface-immobilized cpBrVE was approximately 48 wt%, and the weight ratio of the surface-immobilized lpBrVE was approximately 27 wt% (FIG. 14B).

### Example 2-9: Analysis of surface-segregating property of PS specimen to which ATRP initiator-derived cyclic oligomer (cpBrVE) was added

The surface-segregating property of the PS specimen to which the ATRP initiator-derived cyclic oligomer (cpBrVE) was added, prepared in Example 2-5, was analyzed by X-ray photoelectron spectroscopy (XPS).

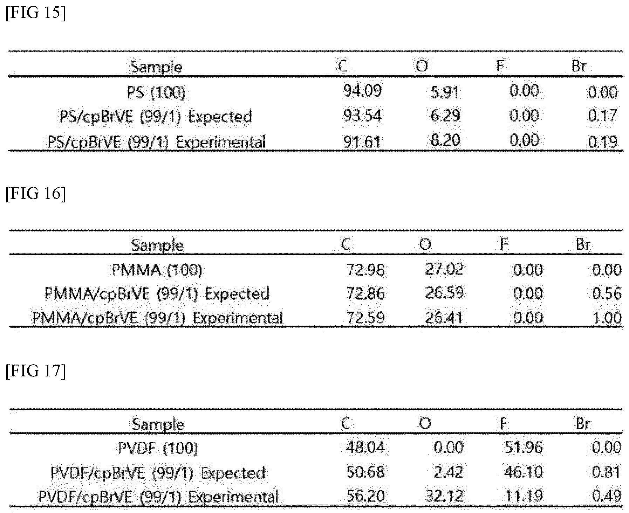

The atomic ratios analyzed by XPS are shown in FIG. 15. Here, the specimen has a characteristic in which Br ions are not present in PS, but present only in the oligomer. According to the XPS analysis results based on this characteristic, there is no significant difference in Br ratio, but the O ratio is higher than the theoretical value, indicating surface segregation. Therefore, it can be seen that the surface-segregating properties are also applied to the PS specimen (FIG. 15).

### Example 2-10: Analysis of surface-segregating property of PMMA specimen to which ATRP initiator-derived cyclic oligomer (cpBrVE) was added

The surface-segregating property of the PMMA specimen to which the ATRP cyclic oligomer (cpBrVE) was added, prepared in Example 2-6, was analyzed by X-ray photoelectron spectroscopy (XPS).

The atomic ratios analyzed by XPS are shown in FIG. 16. Here, this specimen exhibits a characteristic in which Br ions are not present in PMMA, but present only in the oligomer. According to the XPS analysis results based on this characteristic, it can be seen that a higher Br ratio than the theoretical value indicates surface segregation. Therefore, it can be seen that the surface-segregating properties are also applied to the PMMA specimen (FIG. 16).

### Example 2-11: Analysis of surface-segregating property of PVDF specimen to which ATRP initiator-derived cyclic oligomer was added (cpBrVE)

The surface-segregating property of the PVDF specimen to which the ATRP cyclic oligomer (cpBrVE) was added was analyzed by X-ray photoelectron spectroscopy (XPS).

The atomic ratios analyzed by XPS are shown in FIG. 17. Here, this specimen exhibits a characteristic in which Br ions are not present in PVDF, but present only in the oligomer. According to the XPS analysis results based on this characteristic, the Br ratio is slightly low, but the O ratio is significantly high and the F ratio is significantly low compared to the theoretical values, indicating surface segregation. Therefore, it can be seen that surface-segregating properties are also applied to the PVDF specimen (FIG. 17).

### Example 2-12: Verification of biocompatibility in TPU specimen to which ATRP cyclic oligomer (cpBrVE) was added

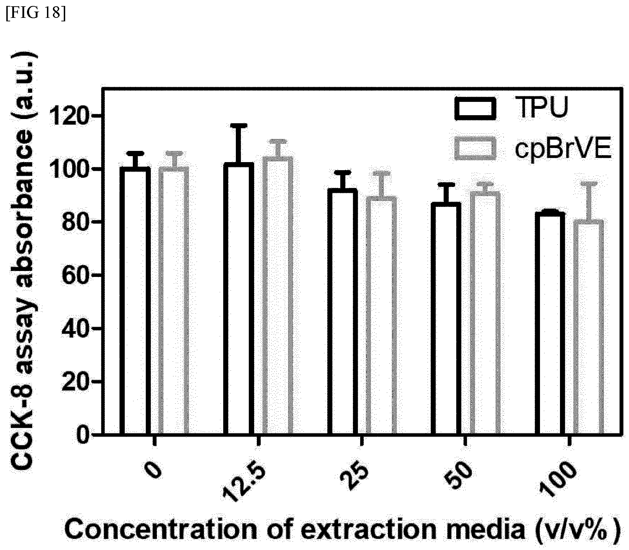

To verify biocompatibility in the TPU specimen to which the ATRP cyclic oligomer (cpBrVE) was added, prepared in Example 2-7, a cytotoxicity test was performed based on the ISO 10993-5:2009 method. The results are shown in FIG. 18.

Specifically, the cells used to determine cytotoxicity were NIH/3T3. For the cytotoxicity test, 6 cm² of the specimen was extracted from 1 mL of a culture for 24 hours, and the cells were treated with the extracted culture for 24 hours to confirm cell viability through CCK-8 analysis. As a result, it was confirmed that there is not significant difference in cell viability between the TPU specimen (TPU) and the oligomer-added TPU specimen (cpBrVE), and the 100% extracted culture of the oligomer-added TPU specimen (cpBrVE) showed 79% or more cell viability. It is considered that no cytotoxicity is observed according to the cytotoxicity criteria of ISO 10993-5.

### Example 2-13: Surface-initiated atom transfer radical polymerization (SI-ATRP) using zwitterion monomer and formation of anti-fouling polymer brush in ATRP cyclic oligomer (cpBrVE)-added TPU specimens

The formation of an anti-fouling polymer brush (surface-grafting) was performed through surface-initiated atom transfer radical polymerization (SI-ATRP).

Specifically, a catalyst aqueous solution for surface-initiated atom transfer radical polymerization (SI-ATRP) was prepared by dissolving 3-[[2-(methacryloyloxy)ethyl]dimethylammonio]propane-1-sulfonate (SBMA) at 20 mg/mL, L-ascorbic acid at 2 mg/mL, 2,2'-bipyridyl at 0.152 mg/mL, and copper (II) bromide at 0.08 mg/mL in distilled water from which oxygen was completely removed using nitrogen gas. Afterward, the TPU specimen to which the ATRP cyclic oligomer (cpBrVE) was added, prepared in Example 2-4, was added to a 70 mL vial and then the vial was filled with the prepared catalyst aqueous solution and sealed with a cap to minimize the entry of oxygen. The surface-initiated atom transfer radical polymerization (SI-ATRP) was performed for 3, 6, or 15 hours at a reaction temperature of 50 °C. The specimen in which the formation (surface-grafting) of the anti-fouling polymer brush was completed was washed five times with ethanol and dried overnight.

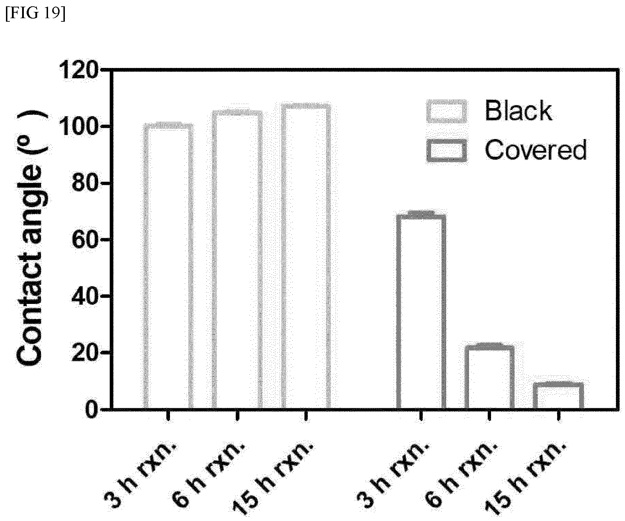

To determine the optimal time for polymer brush formation, a water contact angle was measured, and the results are shown in FIG. 19. The water contact angle gradually decreased as the reaction time increased, and 15 hours, which showed a value of less than 10°, was fixed as the optimal time for forming a polymer brush (FIG. 19).

### Example 2-14: Confirmation of polymer brush formation in TPU specimens in which anti-fouling polymer brush was formed

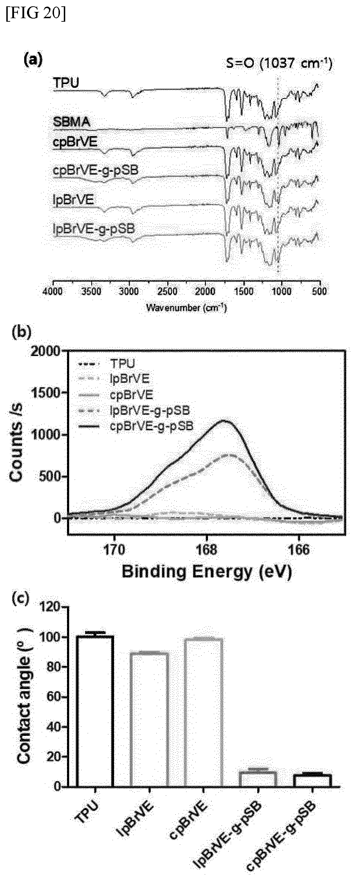

To verify polymer brush formation in the TPU specimens in which an anti-fouling polymer brush was formed, prepared in Example 2-13, Fourier transform infrared spectroscopy (FT-IR), X-ray photoelectron spectroscopy (XPS) and water contact angle measurement were analyzed. The analysis results are shown in FIGS. 20A to 20C. Here, based on the oligomers added to the TPU specimens, the names of specimens without a formed polymer brush were designated as cpBrVE and lpBrVE, and the names of polymer brush-formed specimens were designated as cpBrVE-g-pSB and lpBrVE-g-pSB.

TPU does not have a S=O bond, but the polymer brush prepared using SBMA has a S=O bond. Therefore, as a result of Fourier transform infrared spectroscopy (FT-IR), it was observed that, compared to the specimens without a formed polymer brush, the polymer brush-formed specimens have additional S=O peaks (1037 cm⁻¹) (FIG. 20A).

In addition, TPU has no S atom, but the polymer brush prepared using SBMA has an S atom, which is chemically bonded. Accordingly, as a result of X-ray photoelectron spectroscopy (XPS), it was confirmed that S2p peaks are not observed in the specimens without a formed polymer brush, and S2p peaks are generated in the polymer brush-formed specimens. In addition, it was confirmed that cpBrVE-g-pSB shows a higher S2p peak than lpBrVE-g-pSB. Therefore, it can be confirmed that the density of polymer brushes is high in cpBrVE-g-pSB at a depth of 7 nm from the surface (FIG. 20B).

Compared to TPU, polymer brushes prepared using SBMA are very hydrophilic because zwitterions are present in the brushes. Therefore, as a result of water contact angle measurement, it was confirmed that, compared to the specimens without a formed polymer brush, the water contact angle was much lower in the polymer brush-formed specimens (FIG. 20C).

### Example 2-15: Analysis of surface morphology of TPU specimens in which anti-fouling polymer brush was formed

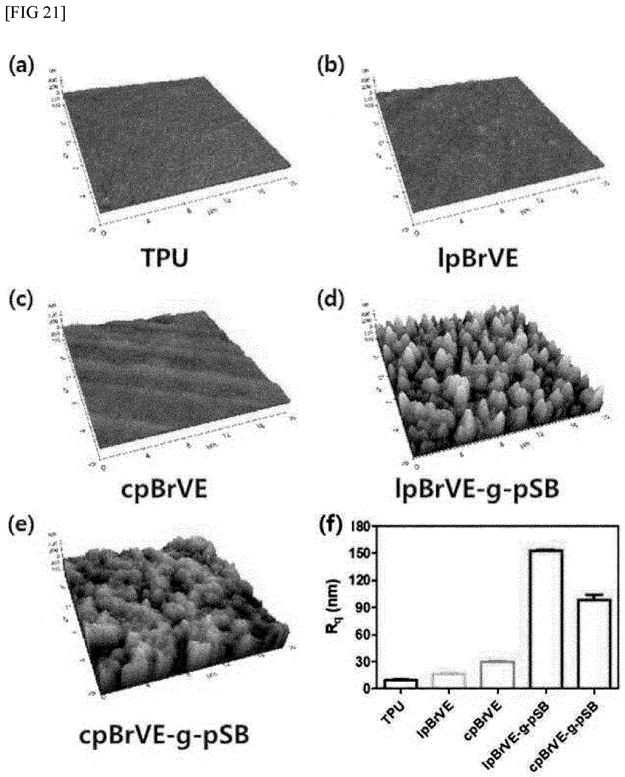

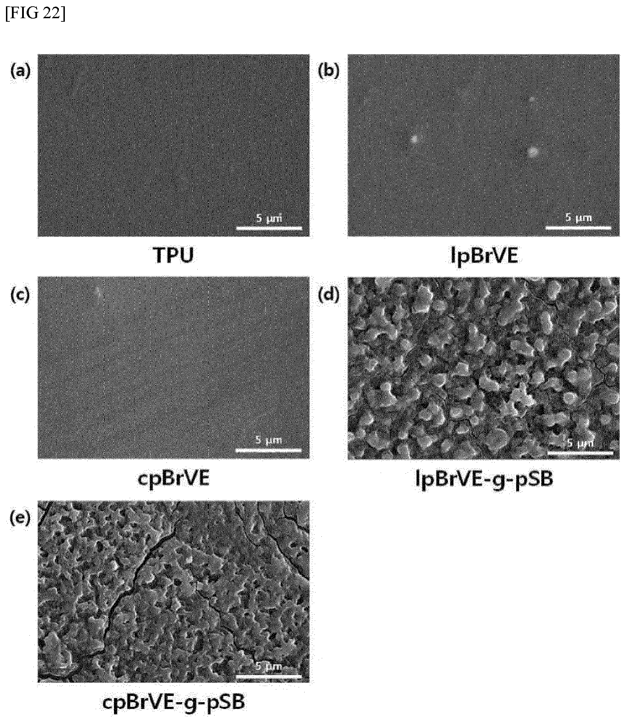

The surface morphology of the TPU specimens in which an anti-fouling polymer brush was formed, prepared in Example 2-13, was analyzed through atomic force microscopy (AFM) and field emission scanning electron microscopy, and the analysis results are shown in FIGS. 21 and 22, respectively. Here, based on the oligomers added to the TPU specimens, the names of the specimens without a formed polymer brush were designated as cpBrVE and lpBrVE, and the names of the polymer brush-formed specimens were designated as cpBrVE-g-pSB and lpBrVE-g-pSB.

According to the AFM analysis results, compared to the specimens without a formed polymer brush (cpBrVE and lpBrVE), the polymer brush-formed specimens (cpBrVE-g-pSB and lpBrVE-g-pSB) show a trend of increased surface roughness, which is due to the formation of the polymer brush. In addition, compared to lpBrVE-g-pSB, cpBrVE-g-pSB tended to have lower surface roughness, which is due to the elimination of void spaces by an increase in brush density on the surface, thereby reducing height differences (FIG. 21).

The results of SEM analysis were similar to the AFM analysis results, and compared to lpBrVE-g-pSB, in cpBrVE-g-pSB, an increase in polymer brush density was confirmed (FIG. 22).

### Example 2-16: Verification of anti-fouling properties of TPU specimens in which anti-fouling polymer brush was formed

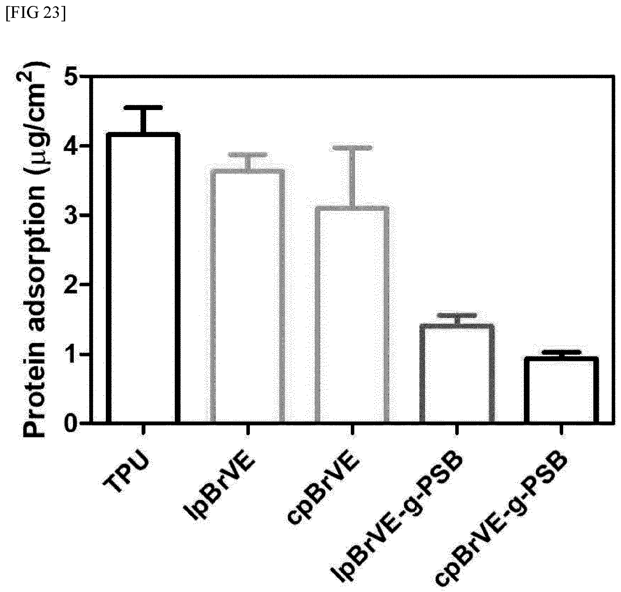

To verify the anti-fouling properties of the TPU specimens in which an anti-fouling polymer brush was formed, prepared in Example 2-13, albumin, platelet and bacterial adhesion tests were performed, and the results are shown in FIGS. 23 to 25, respectively. Here, based on the oligomers added to the TPU specimens, the names of specimens without a polymer brush were designated as cpBrVE and lpBrVE, and the names of the polymer brush-formed specimens were designated as cpBrVE-g-pSB and lpBrVE-g-pSB.

To perform the albumin adhesion test, after contacting 1 cm² of a specimen with a PBS solution containing 1 mg/mL albumin for 1 hour, the number of adhered albumins was analyzed using the BCA assay. According to the analysis, a reduction in albumin adhesion was confirmed in the polymer brush-formed specimens (cpBrVE-g-pSB and lpBrVE-g-pSB). Particularly, the reduction in albumin adhesion was more pronounced in cpBrVE-g-pSB than that in lpBrVE-g-pSB, where approximately 1 µg/cm² of albumin was adhered (FIG. 23).

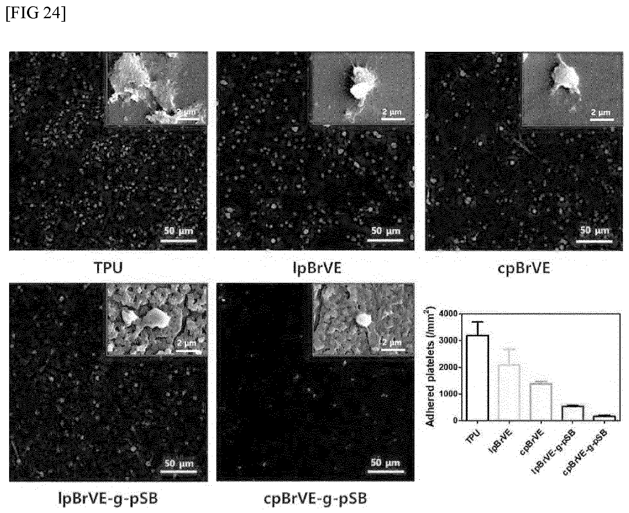

In addition, after adhering 10⁶ platelets to 1 cm² of a specimen for 1 hour, the number and activation degree of platelets were examined. To measure the number of platelets, FITC-attached CD41a was used for staining, and the activation degree was analyzed using an SEM image. The analysis results showed that the number and activation degree of platelets were lower in cpBrVE than in lpBrVE. In addition, in the polymer brush-formed specimens (cpBrVE-g-pSB and lpBrVE-g-pSB), a reduction in number and activation degree of platelets was confirmed, which is more pronounced in cpBrVE-g-pSB than in lpBrVE-g-pSB (FIG. 24).

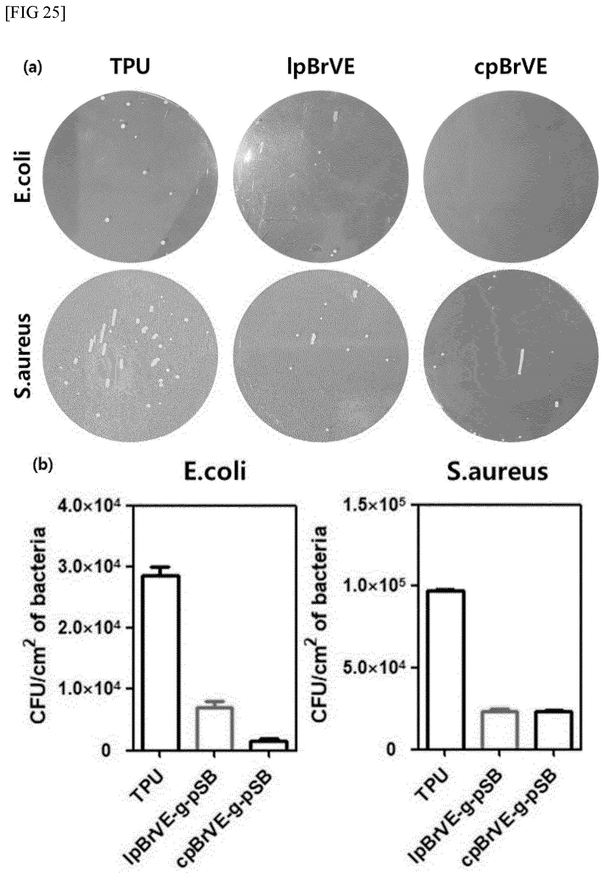

To perform the bacterial adhesion test, after contacting 1 cm² of the specimen with 50 µL of a 10⁴ TPU/mL bacteria solution for 4 hours, the adhered bacteria were transferred to a solid medium to measure the number of bacteria. The analysis results showed a reduction in bacterial adhesion in the polymer brush-formed specimens (cpBrVE-g-pSB and lpBrVE-g-pSB). Particularly, when *E. coli* adhered, this reduction in bacterial adhesion is more pronounced in cpBrVE-g-pSB than in lpBrVE-g-pSB, and in the case of the cpBrVE-g-pSB specimen, the bacteria adhered at approximately less than 2×10³ CFU/cm². When *S. aureus* adhered, it was confirmed that the cpBrVE-g-pSB specimen did not show a significant difference from the lpBrVE-g-pSB specimen, but showed a substantial difference from the TPU specimen. For the cpBrVE-g-pSB specimen, less than 3×10⁴ CFU/cm² of bacteria were adhered (FIG. 25).

### Example 2-17: Analysis of leaching of polymer brush from TPU specimens containing anti-fouling polymer brush

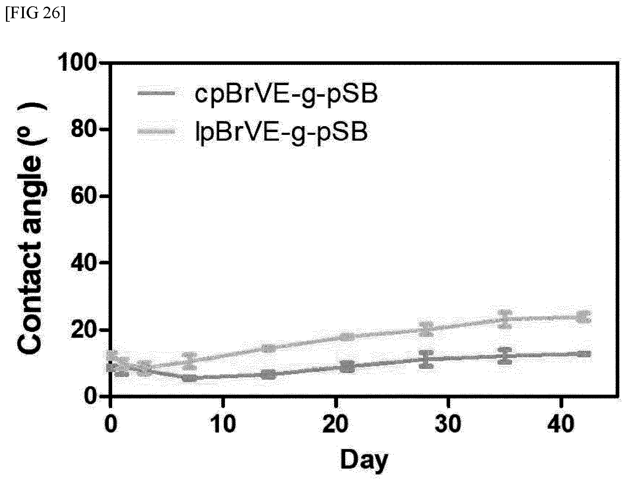

To compare the leaching amounts of a polymer brush from the TPU specimens in which an anti-fouling polymer brush was formed, prepared in Example 2-13, water contact angles were analyzed over time for 28 days, the analysis results are shown in FIG. 26. Here, based on the oligomers added to the TPU specimens, the names of the polymer brush-formed specimens were designated as cpBrVE-g-pSB and lpBrVE-g-pSB.

As a result, it was confirmed that the initial water contact angles of cpBrVE-g-pSB and lpBrVE-g-pSB were approximately 10°, but the polymer brush leached over time and the water contact angle increased. It was confirmed that, compared to the lpBrVE-g-pSB specimen, cpBrVE-g-pSB exhibited a smaller increase in water contact angle, which can be attributed to enhanced polymer entanglement and a reduced contact area (FIG. 26).

### Example 2-18: Surface-initiated atom transfer radical polymerization (SI-ATRP) using PEGMA monomer and formation of anti-fouling polymer brush in ATRP cyclic oligomer (cpBrVE)-added TPU specimens

The formation of a PEG polymer brush (surface-grafting) was performed through surface-initiated atom transfer radical polymerization (SI-ATRP).

Specifically, a catalyst aqueous solution for surface-initiated atom transfer radical polymerization (SI-ATRP) was prepared by dissolving poly(ethylene glycol) methacrylate (PEGMA) at 31 µL/mL, L-ascorbic acid at 2 mg/mL, 2,2'-bipyridyl at 0.152 mg/mL, and copper (II) bromide at 0.08 mg/mL in distilled water from which oxygen was completely removed using nitrogen gas. Afterward, the TPU specimen to which the ATRP cyclic oligomer (cpBrVE) was added, prepared in Example 2-4, was added to a 70 mL vial and then the vial was filled with the prepared catalyst aqueous solution and sealed with a cap to minimize the entry of oxygen. The surface-initiated atom transfer radical polymerization (SI-ATRP) was performed for 15 hours at a reaction temperature of 50 °C. The specimen in which the formation of a PEG polymer brush (surface-grafting) was completed was washed five times with ethanol and dried overnight.

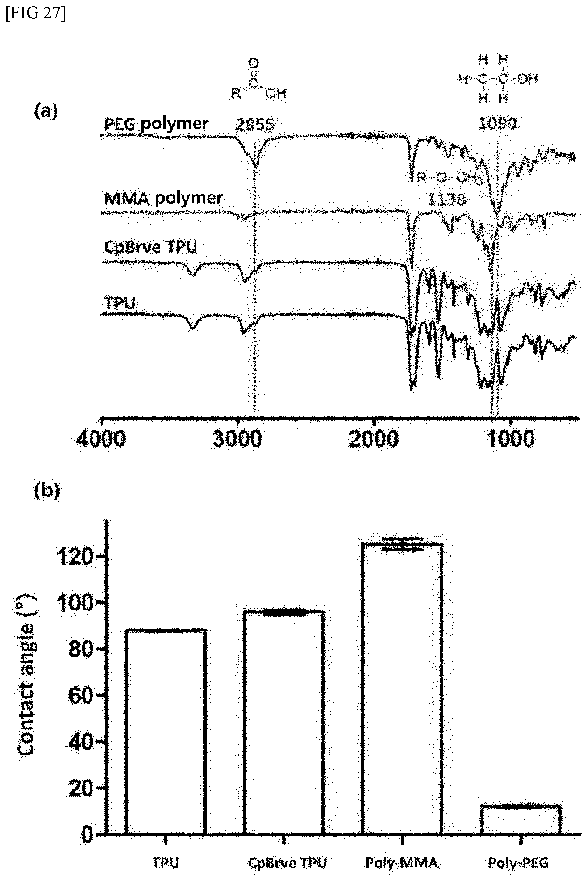

To confirm the formation of a PEG polymer brush, Fourier transform infrared spectroscopy (FT-IR) and water contact angle measurement were performed, and the results are shown in FIG. 27. Accordingly, the water contact angle of the PEG polymer brush was approximately 10°, indicating hydrophilicity.

### Example 2-19: Surface-initiated atom transfer radical polymerization (SI-ATRP) using MMA monomer and formation of PMMA brush in ATRP cyclic oligomer (cpBrVE)-added TPU specimens

The formation of a PMMA brush (surface-grafting) was performed through surface-initiated atom transfer radical polymerization (SI-ATRP).

Specifically, a catalyst aqueous solution for surface-initiated atom transfer radical polymerization (SI-ATRP) was prepared by dissolving methyl methacrylate (MMA) at 7.6 µL/mL, L-ascorbic acid at 2 mg/mL, 2,2'-biypridyl at 0.152 mg/mL, and copper (II) bromide at 0.08 mg/mL in distilled water from which oxygen was completely removed using nitrogen gas. Afterward, the TPU specimen to which the ATRP cyclic oligomer (cpBrVE) was added, prepared in Example 2-4, was added to a 70 mL vial and then the vial was filled with the prepared catalyst aqueous solution and sealed with a cap to minimize the entry of oxygen. The surface-initiated atom transfer radical polymerization (SI-ATRP) was performed for 15 hours at a reaction temperature of 50 °C. The specimen in which the PMMA brush formation (surface-grafting) was completed was washed five times with ethanol and dried overnight.

To confirm the formation of a PMMA brush, Fourier transform infrared spectroscopy (FT-IR) and water contact angle measurement were performed, and the results are shown in FIG. 27. Accordingly, the water contact angle of the PMMA polymer brush was approximately 120°, indicating hydrophobicity.

The above-described description of the present invention is merely provided to exemplify the present invention, and it will be understood by those of ordinary skill in the art to which the present invention belongs that the present invention can be implemented in modified forms without departing from the essential features of the present invention. Therefore, the exemplary embodiments described above should be interpreted as illustrative and not limited in any aspect.

## Claims

1. A cyclic oligomer represented by Chemical Formula 1 below: 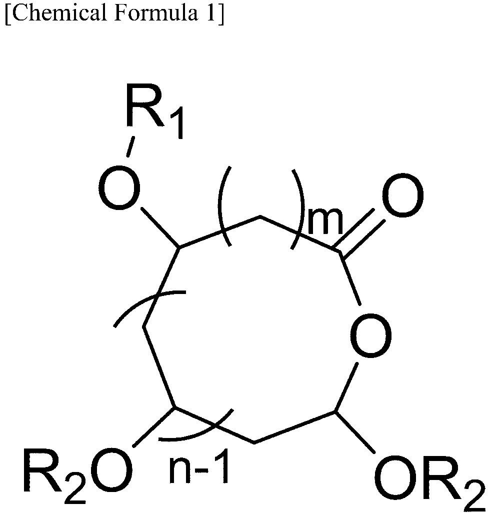 In Chemical Formula 1,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group, and
the sum of 2n and m is an integer from 10 to 600.

2. The cyclic oligomer of claim 1, wherein R₂ is a C2 to C15 alkenyl group or C2 to C15 alkynyl group, or a form in which a functional group with fewer than 15 carbon atoms is additionally introduced at the end thereof through a chemical reaction.

3. The cyclic oligomer of claim 2, wherein the chemical reaction is a click chemical reaction selected from the group consisting of thiol-ene, thiol-yne, azide-ene, and azide-yne.

4. The cyclic oligomer of claim 1, wherein R₂ is a C2 to C15 functional group including an initiator-derived functional group derived from an atom transfer radical polymerization (ATRP) initiator.

5. The cyclic oligomer of claim 1, wherein the cyclic oligomer has a surface-segregating property.

6. The cyclic oligomer of claim 1, wherein the cyclic oligomer has a number average molecular weight (Mₙ) of 5,000 to 20,000.

7. A cyclic hemiacetal ester-based initiator for preparing the cyclic oligomer of claim 1, comprising a compound represented by Chemical Formula 2: 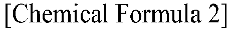 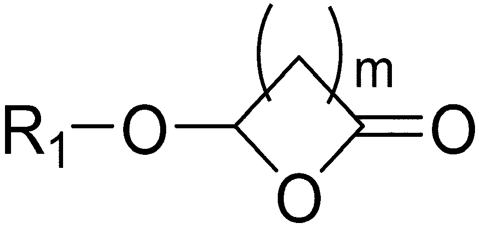 In Chemical Formula 2,
R₁ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, and
m is an integer from 2 to 600.

8. A vinyl ether-based monomer for preparing the cyclic oligomer of claim 1, comprising a compound represented by Chemical Formula 3: 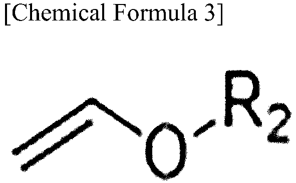 In Chemical Formula 3,
R₂ is a substituted or unsubstituted C1 to C15 alkyl group, C2 to C15 alkenyl group, C2 to C15 alkynyl group, C3 to C15 cycloalkyl group, C6 to C15 aryl group or C6 to C15 heteroaryl group, or a form in which a functional group with fewer than 15 carbon atoms is additionally introduced at the end thereof through a chemical reaction; or a C2 to C15 functional group including an initiator-derived functional group.

9. A method of preparing the cyclic oligomer of claim 1, using ring-expansion cationic polymerization performed with a cyclic hemiacetal ester-based initiator and a vinyl ether-based monomer.

10. The method of claim 9, wherein the ring-expansion cationic polymerization is performed under a temperature condition of -70 to 0 °C.

11. A compounding material comprising the cyclic oligomer of claim 1 and a biocompatible material.

12. The compounding material of claim 11, wherein the biocompatible material includes one or more resins selected from the group consisting of polyolefins, polyethylene (PE), polypropylene (PP), polyvinyl chloride (PVC), polytetrafluoroethylene (PTFE), polyvinyl alcohol (PVA), polyvinyl acetate (PVAc), polybutadiene (PB), polystyrene (PS), polymethylacrylate (PMA), polyethylacrylate (PEA), polymethylmethacrylate (PMMA), polyethylmethacrylate (PEMA), polyhydroxyethylmethacrylate (PHEMA), polyvinylpyrrolidone (PVP), polyethers, polyethylene glycol (PEG), polytetrahydrofuran (PTHF), polyethyleneimine (PEI), polyesters, polycarbonate (PC), polylactide (PLA), polyethylene terephthalate (PET), polyketones, polyetheretherketone (PEEK), polyamides, polyurethane (PU), polyacrylamide (PAAm), polysilanes, polysiloxanes, polydimethylsiloxane (PDMS), starch, cellulose, chitosan, hyaluronic acid, alginate, dextran, gelatin, heparin, polypeptides, and polynucleotides.

13. The compounding material of claim 11, wherein, in the compounding material, the content of the cyclic oligomer is 0.1 to 5 wt%.

14. The compounding material of claim 11, wherein the compounding material is prepared by solution casting or hot-melt extrusion.

15. A composite material for surface treatment, comprising:
the compounding material of claim 11; and
a polymer brush grafted from the compounding material.

16. The composite material of claim 15, wherein the grafting of the polymer brush is performed by atom transfer radical polymerization (ATRP).

17. The composite material of claim 15, wherein the polymer brush is based on an acrylate-based monomer.

18. A medical product which is surface-modified or surface-treated with the compounding material of claim 11.
